# EUROPEAN PATENT SPECIFICATION

(11) **EP 2 584 449 B1**
(45) Date of publication and mention of the grant of the patent: **03.04.2019**
(21) Application number: 12187891.2
(22) Date of filing: 10.10.2012
(51) Int. Cl.: G06F 3/0482, G06F 3/0485

(54) **Information processing apparatus, display control method, and computer program product**
Informationsverarbeitungsvorrichtung, Anzeigesteuerungsverfahren und Computerprogrammprodukt
Appareil de traitement d'informations, procédé de contrôle d'affichage et produit de programme informatique

(30) Priority: 17.10.2011 JP 2011228109
(43) Date of publication of application: 24.04.2013
(73) Proprietor: Sony Corporation, Tokyo 108-0075 (JP)
(72) Inventor: Miyazaki, Reiko, Minato-ku, Tokyo 108-0075 (JP)
(74) Representative: MFG Patentanwälte Meyer-Wildhagen Meggle-Freund Gerhard PartG mbB

(56) References cited:
- US-A1- 2005 037 814
- US-A1- 2010 077 353
- US-A1- 2010 175 027
- US-A1- 2010 277 496
- US-A1- 2011 099 509

## Description

### BACKGROUND

The present disclosure relates to an information processing apparatus, a display control method, and a computer program product.

In general, it is common to display objects such as thumbnails on a display unit of an information processing apparatus, and to scroll the objects so that a desired object appears on the display unit. Information on such technology is disclosed, for example, in Japanese Patent Application Laid-open No. 2009-47721.

US 2010/277496 A1 discloses a data display device for displaying, on a display unit, a group of images related to a plurality of pieces of file data. The data display device comprises an operation unit operable to receive, from a user, a display operation pertaining to the group of images related to the pieces of file data; a storage unit storing cluster information on clusters that are generated by grouping the pieces of file data according to a grouping condition; and a control unit operable to display, on the display unit, the group of images related to the pieces of file data so that the user can distinguish between clusters, in accordance with the display operation received by the operation unit and with the cluster information stored in the storage unit.

US 2010/077353 A1 discloses a digital device and a UI control method thereof. A user interface (UI) generator generates a UI, a controller controls the UI generator to generate a UI which includes a menu area to display a list of contents for a sub-category from one or more sub-categories and a scroll bar to display information on the respective sub-categories, and a display unit displays the generated UI.

US 2010/175027 A1 discloses embodiments related to the non-uniform scrolling of a scrollable list displayed on a computing device display. For example, one embodiment provides a method of operating a display comprising displaying a scrollable list of items that includes a first pair of list positions separated by a first spacing on the display, and a second pair of list positions separated by a second spacing that is different than the first spacing. The method further comprises detecting a movement of a manipulator from a first location to a second location, and in response, scrolling a first list item on the display between the first pair of list positions at a first scroll distance/manipulator movement distance correspondence, and scrolling a second list item between the second pair of list positions at a second scroll distance/manipulator movement distance correspondence.

US 2005/037814 A1 discloses that in a menu structure, information is separately displayed on a menu item-by-menu item basis. Therefore, the adoption of menu structure involves inconvenience. (For example, pieces of information under different menu items cannot be viewed at the same time.) A portable information communication terminal eliminates this inconvenience. Information is configured in list structure wherein items are arranged in succession. List information which is within a predetermined range from a specific item of a predetermined serial number in a selected group (group C) is displayed. Since the top item in group C is the specific item, items corresponding to group B are also displayed. Thus, items corresponding to different groups (group B and group C) can be displayed at the same time.

### SUMMARY

Aspects of the invention are defined in the appended claims.

According to a first aspect, the present invention provides an information processing apparatus in accordance with independent claim 1.

According to a second aspect, the present invention provides an information processing method in accordance with independent claim 8.

According to a third aspect, the present invention provides a computer program product in accordance with independent claim 11. Preferred additional aspects of the present invention are set forth in the dependent claims.

An information processing apparatus, method and computer program product are described that adjust a displayed distance between content based on a relatedness distance between the displayed distance. The apparatus, for example, includes a display controller that displays a first content separated from a second content by a displayed distance. A controller adjusts the displayed distance between the first content and the second content based on a relatedness distance between the first content and the second content when a scrolling operation is performed.

### BRIEF DESCRIPTION OF DRAWINGS

Fig. 1 is a diagram illustrating a hardware configuration of an information processing apparatus according to one embodiment of the present disclosure;
Fig. 2 is a plan view illustrating the information processing apparatus according to the one embodiment;
Fig. 3 is a partial enlarged view of the information processing apparatus shown in Fig. 2, illustrating a state in which a plurality of objects are displayed on a display unit with a finger touching an object;
Fig. 4 illustrates positional relationships among the respective objects when the objects are scrolled by the information processing apparatus according to the embodiment;
Fig. 5 is a diagram provided for explaining a change in display position of the objects when the objects are scrolled by the information processing apparatus according to the embodiment, illustrating the change in display position of the objects when a distance between two adjacent objects d is less than c;
Fig. 6 is a diagram provided for explaining the change in display position of the objects when the objects are scrolled by the information processing apparatus according to the embodiment, illustrating the change in display position of the objects when the distance between two adjacent objects d is greater than c, and less than a;
Fig. 7 is a diagram provided for explaining the change in display position of the objects when the objects are scrolled by the information processing apparatus according to the embodiment, illustrating the change in display position of the objects when the distance between two adjacent objects d is greater than b;
Fig. 8 is a diagram illustrating a relationship between a distance between two adjacent objects and an object moving acceleration when the objects are scrolled by the information processing apparatus according to the embodiment;
Fig. 9 is a flowchart diagram (No. 1) provided for explaining an object-display changing action effected by a scrolling operation in the information processing apparatus according to the embodiment;
Fig. 10 is a flowchart diagram (No. 2) provided for explaining an object-display changing action effected by a scrolling operation in the information processing apparatus according to the embodiment;
Fig. 11 is a flowchart diagram (No. 3) provided for explaining an object-display changing action effected by a scrolling operation in the information processing apparatus according to the embodiment;
Fig. 12 is a diagram illustrating how a display position of an object is changed when the object is scrolled in the information processing apparatus according to the embodiment, in the case in which a value b is the same for all object pairs,;
Fig. 13 is another diagram illustrating how a display position of an object is changed when the object is scrolled in the information processing apparatus according to the embodiment, in the case in which a value b is the same for all object pairs;
Fig. 14 is still another diagram illustrating how a display position of an object is changed when the object is scrolled in the information processing apparatus according to the embodiment, in the case in which a value b is the same for all object pairs;
Fig. 15 is still another diagram illustrating how a display position of an object is changed when the object is scrolled in the information processing apparatus according to the embodiment, in the case in which a value b is the same for all object pairs;
Fig. 16 is still another diagram illustrating how a display position of an object is changed when the object is scrolled in the information processing apparatus according to the embodiment, in the case in which a value b is different from each object pair;
Fig. 17 is still another diagram illustrating how a display position of an object is changed when the object is scrolled in the information processing apparatus according to the embodiment, in the case in which a value b is different from each object pair;
Fig. 18 is still another diagram illustrating how a display position of an object is changed when the object is scrolled in the information processing apparatus according to the embodiment, in the case in which a value b is different from each object pair;
Fig. 19 is still another diagram illustrating how a display position of an object is changed when the object is scrolled in the information processing apparatus according to the embodiment, in the case in which a value b is different from each object pair;
Figs. 20 are diagrams provided for explaining the change in display position of the objects when a first object is touched and scrolled in the information processing apparatus according to the embodiment;
Figs. 21 are diagrams provided for explaining the change in display position of the objects when the first object appears on the display unit by scrolling in the information processing apparatus according to the embodiment;
Figs. 22 are diagrams provided for explaining the change in display position of the objects when a last object is touched and scrolled in the information processing apparatus according to the embodiment;
Figs. 23 are diagrams provided for explaining the change in display position of the objects when the last object appears on the display unit by scrolling in the information processing apparatus according to the embodiment; and
Figs. 24 are diagrams for explaining the change in display position of the objects when the object is scrolled in an information processing apparatus according to a variant of the present disclosure, in the case in which displayed distances between objects are different since a time interval distance between adjacent objects is different from each other.

### DETAILED DESCRIPTION

Hereinafter, an embodiment of the present disclosure will be described with reference to the drawings.

### (Configuration of PC)

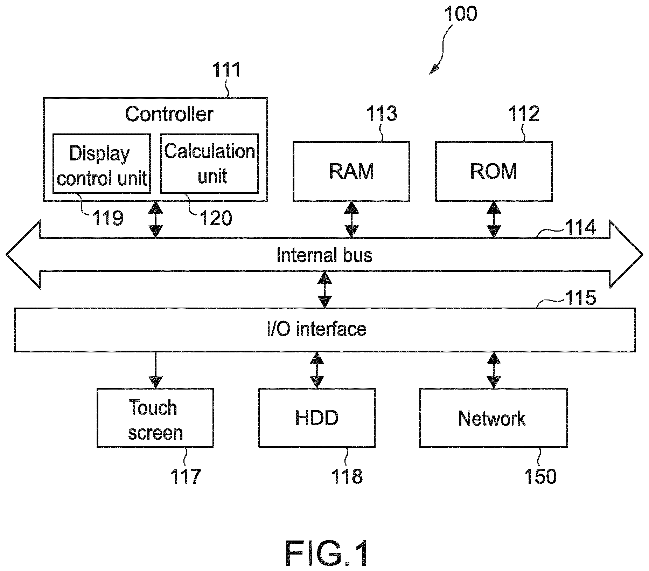

Fig. 1 is a block diagram illustrating an information processing apparatus according to one embodiment of the present disclosure. The present disclosure is applicable, for example, to personal computers (PC), smart phones, and any other information processors which have a display unit and serve a function of scrolling objects as an information processing apparatus.

As illustrated in Fig. 1, an information processing apparatus 100 has a controller 111 including a CPU (central processing unit), a ROM (Read Only Memory) 112, a RAM (random access memory) 113, an input/output interface 115, and an internal bus 114 connecting these components to each other, and a touch screen 117.

The controller 111 accesses the RAM 113 or other components as appropriate, and centrally controls every block of the information processing apparatus 100 while performing various arithmetic processing operations. The controller 111 has a display control unit 119 and a calculation unit 120. The calculation unit 120 calculates a distance between two adjacent objects among the plurality of objects according to a semantic distance of the two adjacent objects when the plurality of objects are scrolled. The calculation unit 120 also calculates a speed, at which a display positions of the objects are changed when the objects are scrolled, based on a scrolling distance. The display control unit 119 causes the plurality of objects to be scrolled based on the calculation results by the calculation unit 120.

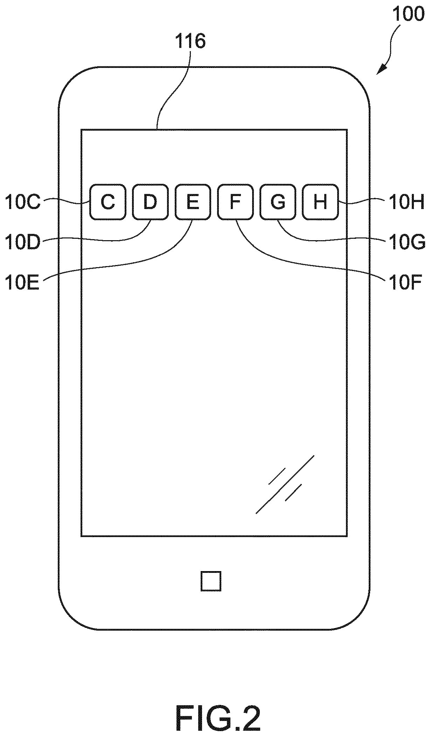

The ROM 112 is a nonvolatile memory fixedly storing firmware such as an OS (operating system), a program, and various parameters, which are provided for execution by the display control unit 119. The ROM 112 stores a program that causes execution of the following steps: a step of causing a plurality of objects to be displayed on a display unit (indicated by reference numeral 116 in Fig. 2) of the information processing apparatus 100, and a step of causing the plurality of objects to be scrolled so that a distance between two adjacent objects among the plurality of objects is made different for each two adjacent objects according to a semantic distance between the two adjacent objects when the objects are scrolled.

The RAM 113 is used as a working area of the display control unit 119, and serves to temporarily retain an OS, various application programs during execution, and currently processed data.

The input/output interface 115 is connected with the touch screen 117, a HDD (hard disk drive) 118 as a storage unit, a network 150, etc. While a single apparatus 100 is shown, it should be recognized that processing, such as distance calculation, may be performed by a remote computer that communicates with the I/O interface 115 and Network 150. The remote computer may for example provide the apparatus 100 with a relatedness distance between two contents that are the subject of a scrolling operation on the apparatus 100. Data of the content may be provided to the apparatus 100 from the remote computer once a selection is made of a content displayed on the touch screen 117.

The aforementioned OS, various application programs, and various data are stored in the HDD118. The network 50 is networked in a wireless or wired fashion. The touch screen 117 is composed of a touch panel as an input device and a liquid crystal panel as a display device, by way of example.

The touch panel of the touch screen 117 is a transparent pressure sensitive input device that is superimposed on the surface of the liquid crystal panel. The touch panel receives a user's input operation through a given part within the touch screen 117. When the user performs a gesture operation such as touching or dragging with respect to the touch panel using the finger or a touch pen, the touch panel determines coordinates of a location corresponding to the gesture operation, and outputs the coordinates to the display control unit 119. In addition to the touch panels, any position determination device which can recognize a gesture operation by a user with respect to the display unit may be used as the input device, regardless of whether it is a contact type or a non-contact type.

The liquid crystal panel of the touch screen 117 has a display unit (indicated by reference numeral 116 in Fig. 2) such as a liquid crystal display, and a display driving unit configured to drive the display unit 116. The aforementioned display driving unit is made up of a pixel driving circuit configured to cause various display data that is input through the bus 114 to be displayed on the aforementioned display unit. The pixel driving circuit applies a driving signal based on an image signal to each of pixels arranged in a matrix-like array at the aforementioned display unit at a predetermined horizontally or vertically driving timing so as to cause a display operation to be executed.

For the information processing apparatus 100 configured as described above, a plurality of objects 10C to 10H can be displayed, for example, on the display unit 116 of the touch screen as illustrated in Fig. 2. Here, it is assumed that twenty six images are photographed and respectively thumb-nailed as objects 10A to 10Z by the information processing apparatus 100. In this embodiment, six thumb-nailed objects among the objects 10A to 10Z are displayed as objects 10, by way of example. The plurality of objects (in this embodiment, twenty six objects 10A to 10Z) include a first object 10A and a last object 10Z. These objects 10 are displayed on the display unit 116 with the objects being arranged along the horizontal direction from left to right in the order of the object 10A, the object 10B, the object 10C, and so on. The first object 10A is the leftmost object, and the last object 10Z is the rightmost objects.

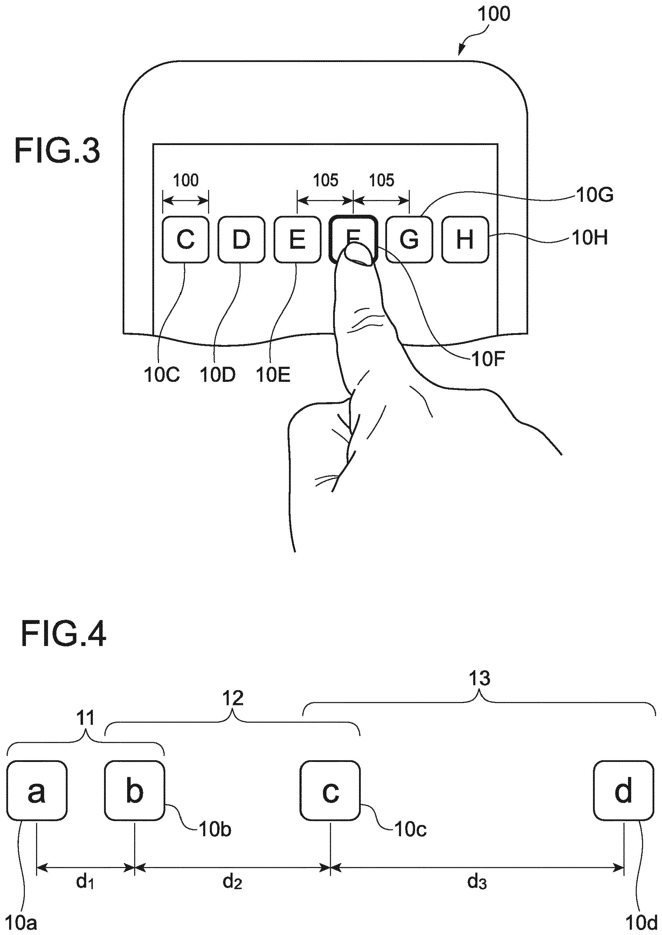

Fig. 3 is a partial enlarged view of Fig. 2, illustrating how scrolling is carried out. As illustrated in Fig. 3, when scrolling is not performed, the plurality of objects 10 are equally spaced one another along the horizontal distance on the display unit 116. By way of example, a distance between each two adjacent objects 10 among the equally-spaced objects 10 is 105 dots (hereinafter, the term "dots" is omitted), and a width of each object 10 is 100. Each object 10 is associated with time information about a time when the object is photographed. These objects 10 are arranged from left to right in ascending time order as viewed in the drawing. More particularly, the objects 10 are arranged in the order from the object associated with older time information to the object associated with newer time information from left to right as viewed in the drawing. Each object 10 is scrolled by contacting and moving a finger on the surface of the display unit 116.

When a user attempts to select a desired object among the twenty six objects 10, if the desired object 10 does not appear on the display unit 116, the user first touches, for example, an object 10F that appears on the display unit with the finger as illustrated in Fig. 3. Then, the user scrolls the objects 10 by moving the finger in the right or left direction, so that the desired object 10 can be viewed on the display unit 116. For example, if the user wishes to see an object 10 associated with newer time information compared with the currently displayed objects 10, the user moves the finger in the left direction as viewed in the drawing, with the finger touching the display unit 116, so that the objects 10 are scrolled. Meanwhile, if the user wishes to see an object 10 associated with older time information compared with the currently displayed objects 10, the user moves the finger in the right direction as viewed in the drawing, with the finger touching the display unit 116, so that the objects 10 are scrolled. In Fig. 3, the object 10F that is touched by the user's finger is framed by a thick line so as to be easily distinguished from the objects 10C to 10E, 10G and 10H which are not touched. In actual, however, the finger touched object 10F may be framed by a line as thick as a line by which the other objects 10C to 10E are framed. Alternatively, the objects may be presented in a manner distinguishing the finger touched object 10F from the other objects 10C to 10E, and 10G and 10H, which are not touched by the finger, for example, by framing the object with a thick line as illustrated in Fig. 3.

### (Object Operations by Scrolling Action)

In the following, a display control method for the information processing apparatus 100 that is configured as described above will be described with reference to the accompanying drawings.

Each object pair, which is composed of two adjacent objects among the plurality of objects, has a predetermined minimal inter-object distance a when the objects are scrolled, and also has an inter-object distance b that corresponds to the semantic distance of the two adjacent objects calculated by the calculation unit 120. When a distance d of the adjacent objects exceeds b or becomes less than a, the display control unit 119 causes the plurality of objects to be scrolled so as to satisfy the relationship given by a≤d≤b. In this embodiment, it is assumed that a is 100 (a=100) for all object pairs. In the expressions above, b is a numerical value that is set for each object pair. In this embodiment, the value of b is set according to a time interval distance as a semantic distance. The semantic distance is a relatedness distance between content. In the content of photographs, the relatedness distance is the semantic distance and may be the time interval between image capture times for the respective images. Likewise, the semantic distance may correspond to a geographical (or positional) distance between locations where the images were taken. The semantic distance may also correspond with other metrics, such as a "genre" distance between two musical contents. For example, classical music may have a large distance from rock & roll, while R&B would have a closer distance to rock & roll.

Next, basic object operations when the objects are scrolled will be described.

Fig. 4 illustrates the positional relationships among the plurality of objects 10a to 10d when the objects are scrolled. The distance between the adjacent objects when the objects are scrolled is made different for each object pair according to the time interval distance as a semantic distance of the two adjacent objects. Each object 10a to 10d is associated with its time information.

By way of example, as time information, the object 10a is associated with January 1, 2010, at 10 am which is the photographed time thereof, the object 10b is associated with January 1, 2010, at 11 am which is the photographed time thereof, the object 10c is associated with January 1, 2010, at 1 pm which is the photographed time thereof, and the object 10d is associated with at 4 pm which is the photographed time thereof. Thus, the time interval distance of a first object pair 11 composed of the adjacent objects 10a and 10b is 1 hour, the time interval distance of a second object pair 12 composed of the adjacent objects 10b and 10c is 2 hours, and the time interval distance of a third object pair 13 composed of the adjacent objects 10c and 10d is 3 hours. Accordingly, the ratio of time interval distance among the first object pair 11, the second object pair 12, and the third object pair 13 is 1:2:3. When b₁, b₂, and b₃ are assumed to be the distances corresponding to the time interval distances as a semantic distance of the first object pair 11, the second object pair 12, and the third object pair 13, it holds that: b₁:b₂:b₃=1:2:3. When the two adjacent objects among the objects 10a to 10d are furthest from one another, the objects 10 a to 10d are scrolled with the display positions being made different so that a distance d₁ between the objects 10a and 10b, a distance d₂ between the objects 10b and 10c, and a distance d₃ between the objects 10c and 10d, satisfy the relationship d₁:d₂:d₃=1:2:3.

In this way, the objects 10 are caused to be scrolled so that the inter-object distance is made different for each of the object pairs according to the semantic distance between the two adjacent objects, so that an intuitive visual understanding of the time interval distances among the objects is provided when the objects are scrolled, and in turn an intuitive knowing of associated time information of each object is provided.

A distance between the adjacent objects corresponding to the time interval distance there between when the plurality of objects are scrolled is calculated by the calculation unit 120. Then, the plurality of objects 10 are scrolled by the display control unit 119 according to a calculation result by the calculation unit 120.

By way of example, assume that a user touches the object 10a with the finger and moves the finger in the left direction, with the four objects 10a to 10d being arranged at equally spaced intervals from left to right in this order. When the user moves the finger in the left direction so as to change the display position of the objects 10a, the distance between the object 10a and the object 10b initially increases as illustrated in Fig. 4. The display position of the object 10b is not changed until the distance d between the object 10a and the object 10b exceeds d₁. In other words, the display position of the object 10b is not changed as long as the following relationship is satisfied:
a≤d (distance between the objects 10a and 10b)≤d₁.
Similarly, the display positions of the objects 10c and 10d are not changed.

Furthermore, when the user scrolls the object 10a in the left direction so that the display position of the object 10a is changed and the distance d between the objects 10a and 10b exceeds d₁, the object 10b is scrolled towards the object 10a so that the following relationship is satisfied:
a≤d (distance between the objects 10a and 10b)≤d₁.
As the display position of the object 10b is changed by scrolling, the distance d between the objects 10b and 10c is changed. The display position of the object 10c is not changed until the distance d between the object 10b and the object 10c increases to exceed d₂. In other words, the display position of the object 10c is not changed as long as the following relationship is satisfied: a≤d (distance between the objects 10b and 10c) ≤d₂. Thus, the display position of the object 10d is similarly unchanged.

Furthermore, when the user scrolls the object 10a in the left direction so that the display position of the object 10a is changed and the distance d between the objects 10b and 10c exceeds d₂, the object 10_{c} is scrolled towards the object 10b so that the following relationship is satisfied:
a≤d (distance between the objects 10b and 10c)≤d₂.
As the display position of the object 10c is changed by scrolling, the distance d between the objects 10c and 10d is changed. The display position of the object 10d is not changed until the distance d between the object 10c and object 10d increases to exceed d₃ by scrolling. In other words, the display position of the object 10d is not changed as long as the following relationship is satisfied: a≤d (distance between the objects 10c and 10d)≤d₃.

Furthermore, as the display position of the object 10c is changed by scrolling, the distance d between the objects 10c and 10d is changed. When the distance d between the objects 10c and 10d exceeds d₃, the object 10d is scrolled towards the object 10b so that the following relationship is satisfied: a≤d (distance between the objects 10c and 10d)≤d₃.

In this way, the objects are scrolled in a chain-reacting fashion in the order in which the objects are arranged from the object, the display position of which is changed first by scrolling, the object next to the first scrolled object, the object further next thereto, and so on. When the objects are separated to be furthest from one another when the objects are scrolled, as illustrated in Fig. 4, the positions of the objects are as represented by the relationship given by d₁: d_{2:} d₃=1:2:3, where d₁ is the distance between the adjacent objects 10a and 10b, d₂ is the distance between the adjacent objects 10b and 10c, d₃ is the distance between the adjacent objects 10a and 10b.

Although an example in which the objects 10a to 10d are displayed at the same timing as represented by the relationship d₁:d₂:d₃=1:2:3 has been described above, as illustrated in Fig. 4, the present disclosure is not limited thereto. For example, at a timing, the objects 10a to 10d may be displayed on the display unit in an arrangement in which the distance between the objects 10a and 10b is d₁, the distance between the objects 10b and 10c is not d₂, and the distance between the objects 10c and 10d is not d₃. At another timing, the objects 10a to 10d may be displayed on the display unit in an arrangement in which the distance between the objects 10a and 10b is not d₁, the distance between the objects 10b and 10c is d₂, and the distance between the objects 10c and 10d is not d₃. At still another timing, the objects 10a to 10d may be displayed on the display unit in an arrangement in which the distance between the objects 10a and 10b is not d₁, the distance between the objects 10b and 10c is not d₂, and the distance between the objects 10c and 10d is d₃. In this way, the timing at which the distance d between the adjacent objects is changed to b may be made different for each object pair.

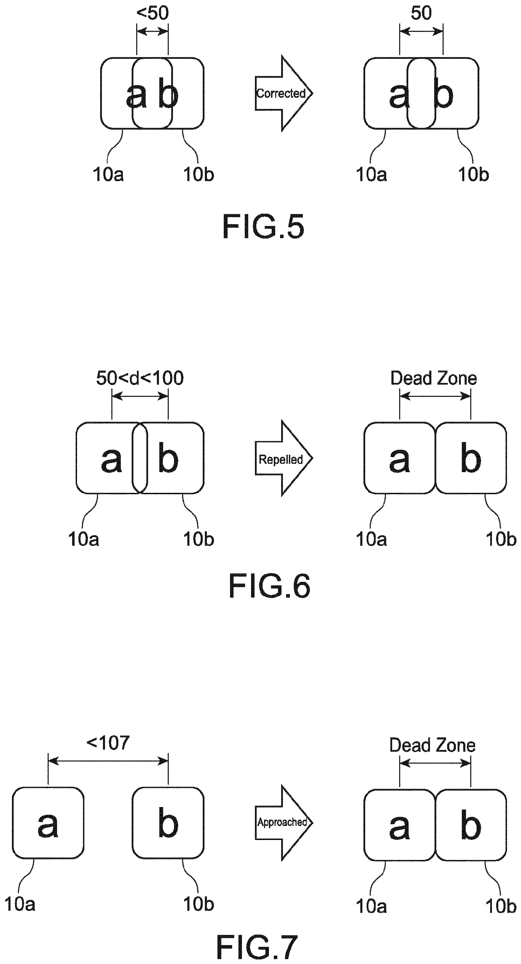

Fig. 5 illustrates operations of the objects when the objects are scrolled, in a case where the distance d between the adjacent objects does not satisfy the relationship: a≤d≤b, and in a case where a degree of overlap between adjacent objects exceeds an acceptable limit.

In this embodiment, an acceptable limit of degree of overlap between the adjacent objects when the objects are scrolled is provided, and the distance between the adjacent objects where an area of overlap of adjacent objects is largest within the acceptable limit is indicated by c. In this embodiment, it is assumed that it holds for each object pair that: c=50 and c<a.

When the two adjacent objects 10a and 10b overlap by scrolling beyond the acceptable limit as illustrated in Fig. 5 (i.e., when the distance between the adjacent objects d<c), the display control unit 119 corrects the display positions of the objects by force-scrolling at least one of the objects 10a and 10b so that the distance d between the objects 10a and 10b is c (c=50), and d is 50 (d=50). The state in which the distance between the adjacent objects is 50 is a state in which the adjacent objects are displayed in a partly overlapped manner with half-regions thereof being overlapped and other half-regions thereof being not overlapped. As described above, according to this embodiment, an acceptable limit of degree of overlap between adjacent objects is provided, and when the acceptable limit is exceeded, the display positions of the objects are forcedly corrected so that the distance between the adjacent objects is 50. As a result, the adjacent objects do not overlap completely with each other, so that it is avoided that the one of the objects is hidden behind the other.

Fig. 6 illustrates operations of the objects when the objects are scrolled, in a case where the distance d between the adjacent objects does not satisfy the relationship: a≤d≤b, and in a case where the degree of overlap between the adjacent objects c satisfies the relationship: c<d<a (in this embodiment, c=50, and a=100).

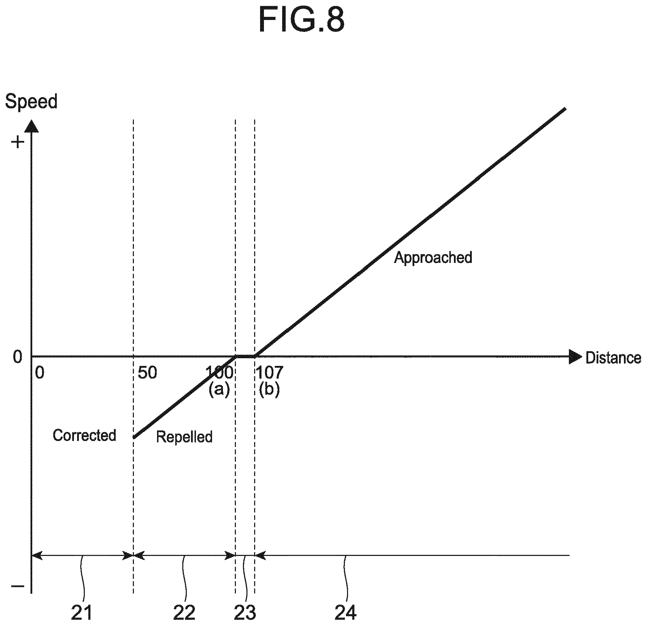

As illustrated in Fig. 6, when the distance d between the adjacent objects satisfies the relationship: 50<d<100, the display control unit 119 causes at least one of the objects 10a and 10b to be scrolled so that the distance d there between increases to a (a=100) in a fashion that the objects repel each other. Furthermore, as illustrated in Fig. 8, a speed at which the display position of the object is changed is different for each scrolling distance of the object, and the speed of the object is higher for a greater scrolling distance. As a result, even if the scrolling distance is different for each object, a length of time available for each object to change an object display position can be made substantially the same for all the objects. As used herein, a scrolling distance means an amount of change in object display position. Fig. 8 illustrates a relationship between a scrolling distance (on the horizontal axis) and a speed (on the vertical axis) during scrolling, corresponding to Figs. 5 to 7. In this embodiment, it is assumed that the distance between the adjacent objects after repulsive movement is 100. However, the distance d is not limited thereto, and may be any distance that satisfies the relationship: a≤d≤b. As a result, the adjacent objects do not overlap completely, so that it is avoided that the one of the objects is hidden behind the other.

Fig. 7 illustrates operations of the objects when the objects are scrolled, in a case where the distance d between the adjacent objects does not satisfy the relationship: a≤d≤b, and in a case where the distance between the adjacent objects d satisfies the relationship: d>b.

As illustrated in Fig. 7, when the distance d between the object 10a and the object 10b satisfies the relationship: d>b (here, a description is made on the assumption that b=107), the display control unit 119 causes at least one of the object 10a and the object 10b to be scrolled so that the distance there between decreases to a (a=100) in a fashion that the objects approach one another. Furthermore, as illustrated in Fig. 8, a speed at which the display position of the object is changed is different for each scrolling distance of the object, and the speed of the object is higher for a greater scrolling distance. As a result, even if the scrolling distance is different for each object, a length of time available for each object to change an object display position can be made substantially the same for all the objects. In this embodiment, it is assumed that the distance d between the adjacent objects after approaching movement is 100. However, the distance d is not limited thereto. The distance d may be any distance that satisfies the relationship: a≤d≤b.

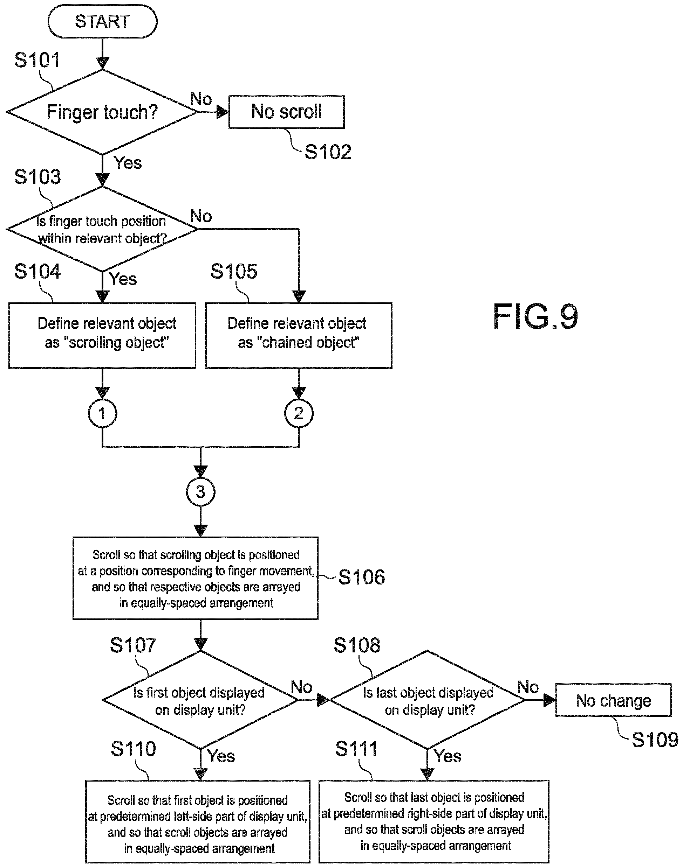

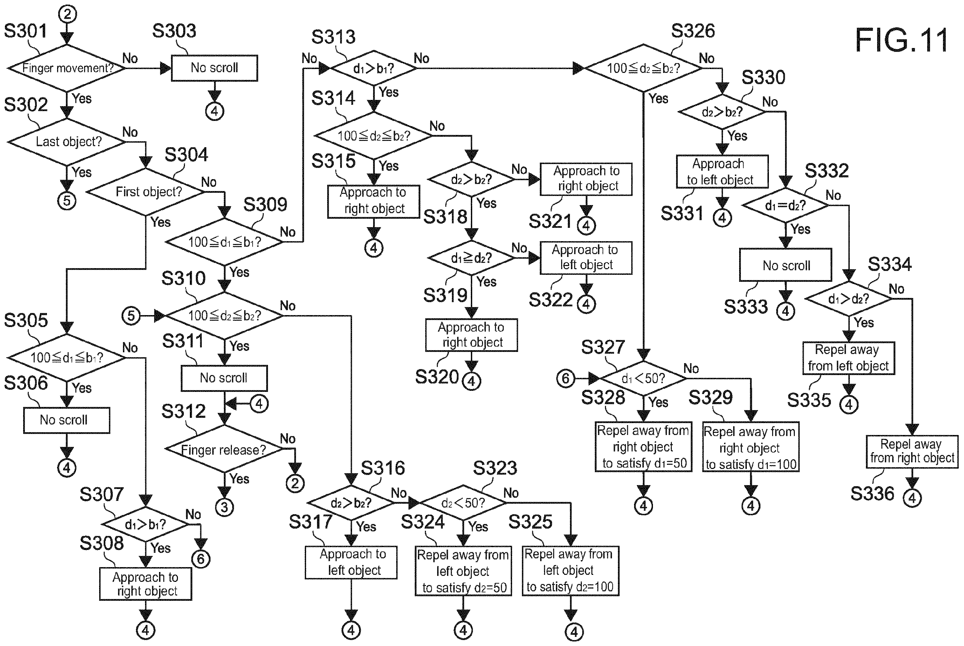

In the following, a display control method for the information processing apparatus 100 described above will be described with reference to the flowcharts illustrated in Fig. 9 to Fig. 11. In Fig. 11, an object adjacent to the right side of a relevant object is referred to as a right object, and an object adjacent to the left side thereof is referred to as a left object.

When, for example, a camera application is started in the information processing apparatus 100, the display control unit 119 causes six objects to be displayed on the display unit 116, as illustrated in Fig. 2. Here, descriptions are given for the case in which twenty six objects 10A to 10Z are scrolled and displayed. The objects 10A to 10Z are images photographed with a camera function of the information processing apparatus 100. These objects 10 are arranged from left to right in ascending time order as viewed in the drawing. More particularly, the objects 10 are arranged in the order from the object associated with older time information to the object associated with newer time information from left to right as viewed in the drawing. The objects 10A to 10Z include a first object 10A (an object associated with the oldest time information) and a last object 10Z (an object associated with the newest time information). When the camera application is started, six object 10A to 10F are displayed on the display unit 116 in order, for example, from the object 10A associated with the oldest time information. In the following, a case of scrolling the display unit 116 on which objects 10C to 10H are displayed as illustrated in Fig. 2 after a startup screen is scrolled will be described by way of example. As illustrated in Fig. 3, the six objects 10C to 10H each having a width of 100 are displayed with the objects being equally-spaced intervals on the display unit 116 in a non-scrolled state. In this example, the six objects are displayed with a distance between the center lines of each two adjacent objects being 105.

Following steps are performed in parallel for respective objects. As illustrated in Fig. 9, the display control unit 119 first determines whether or not there is a finger touch by a user on any of the objects (step 101 (S101)).

If it is determined that there is no finger touch (No), the display control unit 119 proceeds to step 102 (S102) where no scrolling occurs.

If it is determined that there is a finger touch (Yes), the display control unit 119 further determines whether or not a finger touch position is within a relevant object (step 103 (S103)).

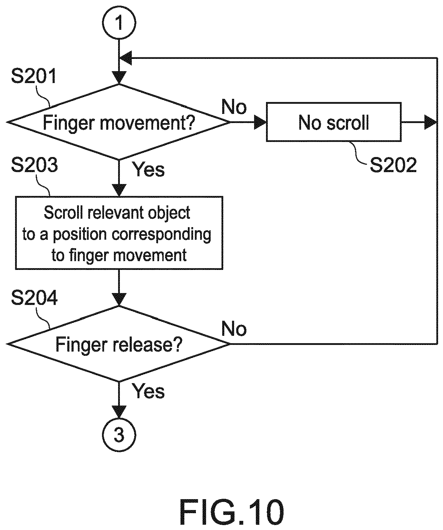

If it is determined that the finger touch position is within the relevant object in S103 (Yes), the display control unit 119 defines the relevant object as a scrolling object (step 104 (S104)). For example, in Fig. 3, the object 10F touched by a user is defined as a scrolling object. The object defined as a scrolling object advances to the steps illustrated in Fig. 10. Circled figures 1 and 3 in Figs. 9 and 10 indicate that the steps in Fig. 10 are inserted between S104 and S106 in Fig. 9.

If it is determined in S103 that the finger touch position is not within the relevant object (No), the display control unit 119 defines the relevant object as a chained object (step 105 (S105)). For example, in Fig. 3, the objects 10A to 10E and 10G to 10Z, which are objects other than the user-touched object 10F, are determined as chained objects. The objects which are determined as chained objects advance to the steps illustrated in Fig. 11. Circled figures 2 and 3 in Figs. 9 and 11 indicate that the steps in Fig. 11 are inserted between S105 and S106 in Fig. 9.

Next, a display control method for an object defined as a scrolling object will be described below.

The display control unit 119 determines whether or not a finger is horizontally moving on the display unit 116 with the object 10F, which is defined as a scrolling object in step S104, being touched with the finger (step 201 (S201).

If it is determined in S201 that there is no finger movement (No), the display control unit 119 advances to step 202 (S202) where scrolling of the relevant object, which is a scrolling object (the object 10F in Fig. 3), does not occur.

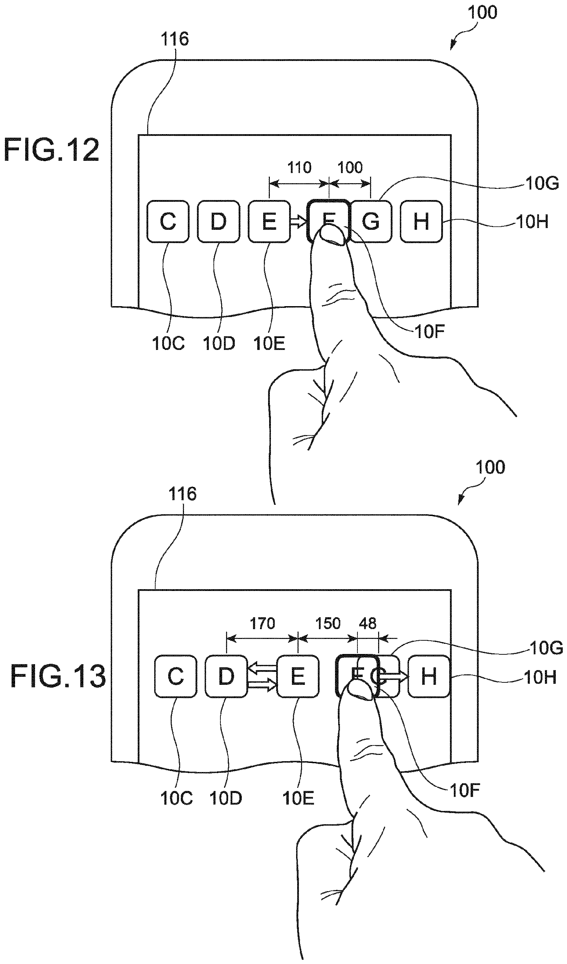

If it is determined in S201 that there is a finger movement (Yes), the display control unit 119 causes the relevant object 10F, which is a scrolling object, to be scrolled so that the relevant object 10F is displayed at a position corresponding to the finger movement, for example, as illustrated in Figs. 12 and 13 (step 203 (S203)).

After that, the display control unit 119 determines whether or not the finger is off the relevant object 10F and there is a finger release (step 204 (S204)).

If it is determined in S204 that there is a finger release (Yes), the display control unit 119 advances to step 106 (S106) in Fig. 9. If it is determined in S204 that there is no finger release (No), the display control unit 119 returns to step 201 (S201).

Next, a display control method for an object defined as a chained object will be described below with reference to Fig. 11. Here, it is assumed that a distance between the relevant object in which processing illustrated in Fig. 11 is performed and an immediate right adjacent object thereof is d₁, and a distance between the relevant object and an immediate left adjacent object thereof is d₂. Furthermore, it is also assumed that a predetermined minimal distance a between the adjacent objects when they are scrolled is 100, a numerical value corresponding to a time interval distance between the relevant object and the immediate right adjacent object is b₁, and a numerical value corresponding to a time interval distance between the relevant object and the immediate left adjacent object is b₂. The numerical values b₁ and b₂ are calculated by the calculation unit 120 according to the time interval distance between the relevant object and the immediate right adjacent object and the time interval distance between the relevant object and the immediate left adjacent object. As described above, when the distance d₁ between the relevant object and the immediate right adjacent object does not satisfy the relationship 100≤d₁≤b₁, the objects are scrolled so that the relationship 100≤d₁≤b₁ is satisfied. Similarly, when the distance d₂ between the relevant object and the immediate left adjacent object does not satisfy the relationship 100≤d₂≤b₂, the objects are scrolled so that the relationship 100≤d₂≤b₂ is satisfied. In the following, operations of the objects will be described with reference to the flowchart in Fig. 11.

The display control unit 119 determines whether or not a finger is horizontally moving on the display unit 116 with the display unit 116 being touched with the finger (step 301 (S301).

If it is determined in S301 that there is no finger movement (No), the display control unit 119 advances to step 303 (S303) where the relevant object, which is a chained object, is not scrolled. If it is determined in S301 that there is a finger movement (Yes), the display control unit 119 advances to step 302 (S302).

The display control unit 119 determines in S302 whether or not the relevant object is the last object. If it is determined in S302 that the relevant object is the last object (Yes), the display control unit 119 advances to step 310 (S310). In Fig. 11, circled figure 5 is used for indicating a link between S302 and S310. The last object is the rightmost object, and there is no object that is right adjacent thereto as viewed from the last object. Thus, the last object is taken into account only with an immediate left adjacent object thereof.

In S310, the display control unit 119 determines whether or not the distance d₂ between the relevant object and the immediate left adjacent object satisfies the relationship 100≤d₂≤b₂. If it is determined in S310 that the relationship 100≤d₂≤b₂ is satisfied (Yes), the display control unit 119 does not cause the relevant object to be scrolled (step 311 (S311)). After that, the display control unit 119 advances to step 312 (S312).

If it is determined in S310 that the relationship 100≤d₂≤b₂ is not satisfied (No), the display control unit 119 advances to step 316 (S316). The display control unit 119 determines in S316 whether or not the relationship d₂>b₂ is satisfied.

If it is determined in S316 that the relationship d₂>b₂ is satisfied (Yes), the display control unit 119 causes the relevant object to be moved toward the left adjacent object (step 317 (S317)). After that, the display control unit 119 advances to S312. In Fig. 11, circled figure 4 is used for indicating a link between S317 and S312. In Fig. 11, circled figure 4 is used for indicating a link between S312 and a step relating to S312 in the same way.

If it is determined in S316 that the relationship d₂>b₂ is not satisfied (No), the display control unit 119 then determines in step 323 (S323) whether or not d₂ is less than 50 (d₂<50). If it is determined in S323 that the relationship d₂<50 is satisfied (Yes), the display control unit 119 causes the relevant object to be scrolled to repel away from the left adjacent object so that the relationship d₂=50 is satisfied (step 324 (S324)). In other words, the display control unit 119 causes the relevant object to be scrolled to approach to the right adjacent object. After that, the display control unit 119 advances to S312.

If it is determined in S323 that the relationship d₂<50 is not satisfied (No), the display control unit 119 causes the relevant object to be scrolled to repel away from the left adjacent object so that the relationship d₂=100 is satisfied (step 325 (S325)). In other words, the display control unit 119 causes the relevant object to be scrolled to approach to the right adjacent object. After that, the display control unit 119 advances to S312.

If it is determined in S302 that the relevant object is not the last object (No), the display control unit 119 advances to step 304 (S304). The display control unit 119 determines in S304 whether or not the relevant object is the first object (step 304 (S304)).

If it is determined in S304 that the relevant object is the first object (Yes), the display control unit 119 advances to step 305 (S305). The first object is the leftmost object, and there is no object that is left adjacent thereto as viewed from the first object. Thus, the first object is taken into account only with the immediate right adjacent object.

In S305, the display control unit 119 determines whether or not the distance d₁ between the relevant object and the immediate right adjacent object satisfies the relationship 100≤d₁≤b₁. If it is determined in S305 that the relationship 100≤d₁≤b₁ is satisfied (Yes), the display control unit 119 does not cause the relevant object to be scrolled (step 306 (S306)). After that, the display control unit 119 advances to S312.

If it is determined in S305 that the relationship 100≤d₁≤b₁ is not satisfied (No), the display control unit 119 advances to step 307 (S307). The display control unit 119 determines in S307 whether or not the relationship d₁>b₁ is satisfied.

If it is determined in S307 that the relationship d₁>b₁ is satisfied (Yes), the display control unit 119 causes the relevant object to be scrolled to approach to the right adjacent object (step 308 (S308)). After that, the display control unit 119 advances to step 312 (S312).

If it is determined in S307 that the relationship d₁>b₁ is not satisfied (No), the display control unit 119 then determines whether or not d₁ is less than 50 (d₁<50) (step 327 (S327)). In Fig. 11, circled finger 6 is used for indicating a link between S307 and S327. If it is determined in S327 that the relationship d₁<50 is satisfied (Yes), the display control unit 119 causes the relevant object to be scrolled to repel away from the right adjacent object so that d₁=50 is satisfied (step 328 (S328)). In other words, the display control unit 119 causes the relevant object to be scrolled to approach to the left adjacent object. After that, the display control unit 119 advances to S312.

If it is determined in S327 that the relationship d₁<50 is not satisfied (No), the display control unit 119 causes the relevant object to be scrolled to repel away from the right adjacent object so that the relationship d₁=100 is satisfied (step 329 (S329)). In other words, the display control unit 119 causes the relevant object to be scrolled to approach to the left adjacent object. After that, the display control unit 119 advances to S312.

If it is determined in S304 that the relevant object is not the first object (No), the display control unit 119 advances to step 309 (S309). In S309, the display control unit 119 determines whether or not the distance d₁ between the relevant object and the immediate right adjacent object satisfies the relationship 100≤d₁≤b₁. If it is determined in S309 that the relationship 100≤d₁≤b₁ is satisfied (Yes), the display control unit 119 then determines whether or not the distance d₂ between the relevant object and the immediate left adjacent object satisfies the relationship 100≤d₂≤b₂ (step 310 (S310)) . If it is determined as Yes in S310, the display control unit 119 does not cause the relevant object to be scrolled (step 311 (S311). After that, the display control unit 119 advances to step 312 (S312).

If it is determined in S309 that the relationship 100≤d₁≤b₁ is not satisfied (No), the display control unit 119 advances to step 313 (S313). The display control unit 119 determines in S313 whether or not the relationship d₁>b₁ is satisfied.

If it is determined in S313 that the relationship d₁>b₁ is satisfied (Yes), the display control unit 119 then determines whether or not the distance d₂ between the relevant object and the immediate left adjacent object satisfies the relationship 100≤d₂≤b₂ (step 314 (S314)) . If it is determined in S314 that the relationship 100≤d₂≤b₂ is satisfied (Yes), the display control unit 119 causes the relevant object to be scrolled to approach to the right adjacent object (step 315 (S315)). After that, the display control unit 119 advances to S312.

If it is determined in S310 that the relationship 100≤d₂≤b₂ is not satisfied (No), the display control unit 119 advances to step 316 (S316). The display control unit 119 determines in S316 whether or not the relationship d₂>b₂ is satisfied. If it is determined in S316 that the relationship d₂>b₂ is satisfied (Yes), the display control unit 119 causes the relevant object to be scrolled to approach to the left adjacent object (step 317 (S317)). After that, the display control unit 119 advances to S312.

If it is determined in S316 that the relationship d₂>b₂ is not satisfied (No), the display control unit 119 then determines whether or not d₂ is less than 50 (d₂<50) (step 323 (S323)). If it is determined in S323 that the relationship d₂<50 is satisfied (Yes), the display control unit 119 causes the relevant object to be scrolled to repel away from the left-adjacent object so that d₂=50 is satisfied (step 324 (S324)). After that, the display control unit 119 advances to S312.

If it is determined in S323 that the relationship d₂<50 is not satisfied (No), the display control unit 119 causes the relevant object to be scrolled to repel away from the left-adjacent object so that d₂=100 is satisfied (step 325 (S325)). After that, the display control unit 119 advances to S312.

If it is determined in S314 that the relationship 100≤d₂≤b₂ is not satisfied (No), the display control unit 119 then determines whether or not the relationship d₂>b₂ is satisfied (step 318 (S318)). If it is determined in S318 that the relationship d₂>b₂ is satisfied (Yes), the display control unit 119 then determines whether or not d₁>d₂ is satisfied (step 319 (S319)). If it is determined in S319 that the relationship d₁>d₂ is satisfied (Yes), the display control unit 119 causes the relevant object to be scrolled to approach to the right adjacent object (step 320 (S320)). After that, the display control unit 119 advances to S312.

If it is determined in S318 that the relationship d₂>b₂ is not satisfied (No), the display control unit 119 causes the relevant object to be scrolled to approach to the right adjacent object (step 321 (S321)). After that, the display control unit 119 advances to S312.

If it is determined in S319 that the relationship d₁>d₂ is not satisfied (No), the display control unit 119 causes the relevant object to be scrolled to approach to the left adjacent object (step 319 (S319)). After that, the display control unit 119 advances to S312.

If it is determined in S313 that the relationship d₁>b₁ is not satisfied (No), the display control unit 119 then determines whether or not the distance d₂ between the relevant object and the immediate left adjacent object satisfies the relationship 100≤d₂≤b₂ (step 326 (S326)) . If it is determined in S326 that the relationship 100≤d₂≤b₂ is satisfied (Yes), the display control unit 119 then determines whether or not d₁ is less than 50 (d₁<50) (step 327 (S318)). If it is determined in S327 that the relationship d₁<50 is satisfied (Yes), the display control unit 119 causes the relevant object to be scrolled to repel away the right adjacent object so that d₁=50 is satisfied (step 328 (S328)). After that, the display control unit 119 advances to S312.

If it is determined in S327 that the relationship d₁<50 is not satisfied (No), the display control unit 119 causes the relevant object to be scrolled to repel away from the left adjacent object so that d₁=100 is satisfied (step 329 (S329)). After that, the display control unit 119 advances to S312.

If it is determined in S326 that the relationship 100≤d₂≤b₂ is not satisfied (No), the display control unit 119 then determines whether or not the relationship d₂>b₂ is satisfied (step 330 (S330)). If it is determined in S330 that the relationship d₂>b₂ is satisfied (Yes), the display control unit 119 causes the relevant object to be scrolled to approach to the left adjacent object (step 331 (S331)). After that, the display control unit 119 advances to S312.

If it is determined in S330 that the relationship d₂>b₂ is not satisfied (No), the display control unit 119 then determines whether or not the relationship d₁=d₂ is satisfied (step 332 (S332)). If it is determined in S332 that the relationship d₁=d₂ is satisfied (Yes), the display control unit 119 does not cause the relevant object to be scrolled (step 333 (S333)). After that, the display control unit 119 advances to S312.

If it is determined in S332 that the relationship d₁=d₂ is not satisfied (No), the display control unit 119 then determines whether or not the relationship d₁>d₂ is satisfied (step 334 (S334)). If it is determined in S334 that the relationship d₁>d₂ is satisfied (Yes), the display control unit 119 causes the relevant object to be scrolled to repel away from the left adjacent object (step 335 (S335)). After that, the display control unit 119 advances to S312.

If it is determined in S334 that the relationship d₁>d₂ is not satisfied (No), the display control unit 119 causes the relevant object to be scrolled to repel away from the right adjacent object (step 336 (S336)). After that, the display control unit 119 advances to S312.

In S312, the display control unit 119 determines whether or not there is a finger touch. If it is determined that there is a finger touch (Yes), the display control unit 119 advances to S106 in Fig. 9. If it is determined that there is no finger touch (No), the display control unit 119 returns to S301.

If it is determined in step S204 or S312 that there is a finger touch (Yes), the display control unit 119 causes the scrolling object to be displayed at a position corresponding to a finger movement and further causes the respective objects to be displayed on the display unit 116 in a manner that the objects are equally spaced with a distance of 105 (step 106 (S106)). After that, the display control unit 119 advances to step 107 (S107).

In step S107, the display control unit 119 determines whether or not the first object 10A is displayed on the display unit 116. If it is determined that the first object 10A is displayed on the display unit 116 (Yes), the display control unit 119 advances to step 110 (S110). In S110, the display control unit 119 causes the objects 10 to be scrolled and displayed on the display unit 116, in a manner that the first object is positioned at a predetermined left side part of the display unit 116 and the respective objects are equally spaced with a distance of 105. Here, the predetermined left side part of the display unit 116 is a display position of the leftmost object when a plurality of objects are displayed on an initial screen when a camera application is started. For example, it is a position at which the object 10C is displayed in Fig. 2.

If it is determined in S107 that the first object 10A is not displayed on the display unit 116 (No), the display control unit 119 determines whether or not the last object 10Z is displayed on the display unit 116 (step 108 (S108)).

If it is determined in S108 that the last object 10Z is not displayed on the display unit 116 (No) by the display control unit 119, the screen display is maintained as that displayed at S106, and object display positions are unchanged (step 109 (S109)).

If it is determined in S108 that the last object 10Z is displayed on the display unit 116 (Yes), the display control unit 119 advances to step 111 (S111). In S111, the display control unit 119 causes the objects to be scrolled and displayed on the display unit 116, in a manner that the last object 10Z is positioned at a predetermined right side part of the display unit 116 and the respective objects are equally spaced with a distance of 105. Here, the predetermined right side part of the display unit 116 is a display position of the rightmost object when a plurality of objects are displayed on an initial screen when a camera application is started. For example, it is a position at which the object 10H is displayed in Fig. 2.

As described above, the objects 10 are scrolled according to the flowcharts in Figs. 9 to 11.

Next, examples of specific operations of objects will be described below with reference to Fig. 3, and Figs. 9 to 14. In Fig. 3 and Figs. 12 to 14, it is assumed that each object pair composed of adjacent two objects has the same time interval distance, where a=100 and b=107. In other words, when the distance d between two adjacent objects dose not satisfy the relationship 100≤d≤107, the objects are scrolled so that distance d between the two adjacent objects changes. When the distance d between two adjacent objects satisfies the relationship 100≤d≤107, it is regarded as a dead zone in which the objects are not scrolled. Fig. 3 and Figs. 12 to 14 illustrate changes in object display on the display unit 116 that occur over time when the object 10F is touched and scrolled. As described above, the steps illustrated in Figs. 9 to 11 are performed for each object.

First, when a finger touches the object 10F on the display unit 116 on which the objects 10C to 10H are displayed as illustrated in FIG. 3, it is determined Yes in step S101 in Fig. 9. The object 10F is determined Yes in S103, and is defined as a scrolling object in S104. The objects 10C to 10E, 10G, and 10H are determined No in S103, and are defined as chained objects in S105. The object defined as a scrolling object advances to the flowchart illustrated in Fig. 10. The objects defined as chained objects advance to the flowchart illustrated in Fig. 11.

As illustrated in Fig. 12, if there is a finger movement with the finger touching the object 10F defined as a scrolling object, it is determined Yes in S201 illustrated in Fig. 10, and the object 10F is scrolled to a position corresponding to the finger movement in S203. In Fig. 12, the object 10F is subjected to five scrollings in the right direction as viewed in the drawing. Then, program control advances to S204, and if it is determined in S204 that there is no finger touch, program control returns to S201.

As illustrated in Fig. 12, as the object 10 F is scrolled, the distance d₁ between the object 10E and the object 10F that is right adjacent thereto changes to 110, which exceeds b₁ (b₁=107). If it is determined that there is a finger movement on the display unit 116 in S301 in Fig. 11 (Yes), program control advances to S302. It is determined in S302 that the object 10E is not the last object (No), and subsequently it is determined in S304 that the object 10E is not the first object (No), and program control advances to S309. It is determined in S309 that the distance d₁ between the object 10E and the object 10F that is right adjacent thereto exceeds b₁ (b₁=107), and program control advances to S313, where it is determined Yes. Thus, program control advances to S314. The distance d₂ between the object 10E and the object 10D that is left adjacent thereto is 105, which is determined Yes in S314, and program control advances to S315. In S315, the object 10E is scrolled to approach to the object 10F that is the right adjacent object. Then, program control advances to S312, and if it is determined in S312 that there is no finger release, program control returns to S301.

As illustrated in Fig. 12, as the object 10 F is scrolled, the distance d₂ between the object 10G and the object 10F that is left adjacent thereto changes to 100, which is within the range represented by 100≤d₂≤107. The distance between the object 10C and the object 10E, the distance between the object 10D and the object 10E, and the distance between the object 10G and the object 10H all change to 105, which is within the range represented by 100≤d≤107. As illustrated in Fig. 11, if it is determined in S301 that there is a finger movement on the display unit 116 (Yes), program control advances to S302. It is determined in S302 that the objects 10C, 10D, 10G, and 10H are not the last objects (No), and subsequently it is determined in S304 that they are not the first objects (No), and program control advances to S309. For each of the objects 10C, 10D, 10G, and 10H, the distance d₁ from its right adjacent object satisfies the relationship 100≤d₁≤107. It is determined Yes in S309, and program control advances to S310. Subsequently, for each of the objects 10C, 10D, 10G, and 10H, the distance d₂ from its left adjacent object satisfies the relationship 100≤d₂≤107. It is determined Yes in S310, and program control advances to S311. Then, if it is determined in S312 that there is no finger release, program control returns to S301. Regarding the object 10C, an object 10B, which corresponds to a left adjacent object to the object 10C, is not displayed on the display unit 116. However, since the object 10C is not the first object 10A, an object (10B) to be referenced by the object 10C is present on the left side of the object 10C. Similarly, regarding the object 10H, although an object 101, which corresponds to its right adjacent object, is not displayed on the display unit 116, an object (10I) to be referenced by the object 10H is present on the right side of the object 10H.

As illustrated in Fig. 13, if there is a finger movement with the finger further touching the object 10F, it is determined Yes in S201, and the object 10F is scrolled to a position corresponding to the finger movement in S203. In Fig. 13, the object 10F is scrolled so as to overlap the object 10 G that is right adjacent to the object 10F. Then, program control advances to S204, and if it is determined in S204 that there is no finger release, program control returns to S201.

As illustrated in Fig. 13, as the object 10F is scrolled, the distance d between the object 10F and the object 10G changes to 48 (d=48). Furthermore, the distance d between the object 10E and the object 10F changes to 150 (d=150), and the distance between the object 10D and the object 10E changes to 170 (d=170). The distance d between the object C and the object D, and the distance d between the object G and the object H are all 105. Until the object display changes from the display position of the object 10F illustrated in Fig. 12 to the display position of the object 10F in Fig. 13, the aforementioned processing routine is performed more than once according to the flowcharts illustrated in Figs. 9 to 11, and the inter-objects distances finally take the numerical values as those in Fig. 13.

In the following, operations of the object 10E in Fig. 13 will be described with reference to Fig. 11. If it is determined that there is a finger movement on the display unit 116 in S301 in Fig. 11 (Yes), program control advances to S302. It is determined in S302 that the object 10E is not the last object (No), and subsequently it is determined in S304 that the object 10E is not the first object (No), and program control advances to S309. In S309, the distance d₁ between the object 10E and the object 10F that is right adjacent thereto changes to 150, which exceeds b₁ (b₁=107), so that it is determined No in S309. Then, program control advances to S313. Subsequently, it is determined Yes in S313, and program control advances to S314. The distance d₂ between the object 10E and its left adjacent object 10D changes to 170, which exceeds b₂ (b₂=107). Thus, it is determined No in S314, and subsequently it is determined Yes in S318, and program control advances to S319. Regarding the object 10E, the relationship d1≥d2 (the distance to the right adjacent object d1≥ the distance to the left adjacent object d2) is not satisfied. Thus, in S319, it is determined No, and the object 10E is scrolled to approach to its left adjacent object 10D in S322. Then, program control advances to S312, and if it is determined in S312 that there is no finger release, program control returns to S301.

In the following, operations of the object 10D in Fig. 13 will be described with reference to Fig. 11. If it is determined that there is a finger movement on the display unit 116 in S301 in Fig. 11 (Yes), program control advances to S302. It is determined in S302 that the object 10D is not the last object (No), and subsequently it is determined in S304 that the object 10D is not the first object (No), and program control advances to S309. In S309, the distance d₁ between the object 10D and the object 10E that is right adjacent thereto changes to 170, which exceeds b₁ (b₁=107), so that it is determined No in S309, and subsequently, it is determined Yes in S313. Then, program control advances to S314. The distance d₂ between the object 10D and the object 10C that is left adjacent thereto is 105, and it is determined Yes in S314. Then, program control advances to S315. In S315, the object 10D is scrolled to approach to the right adjacent object 10E. Then, program control advances to S312, and if it is determined in S312 that there is no finger release, program control returns to S301.

In the following, operations of the object 10G in Fig. 13 will be described with reference to Fig. 11. If it is determined that there is a finger movement on the display unit 116 in S301 in Fig. 11 (Yes), program control advances to S302. It is determined in S302 that the object 10G is not the last object (No), and subsequently it is determined in S304 that the object 10G is not the first object (No), and program control advances to S309. The distance d₁ between the object 10G and the object 10H that is right adjacent thereto changes to 105 in S309, so that it is determined Yes in S309, and program control advances to S310. The distance d₂ between the object 10G and the object 10F left adjacent thereto is 48, so that it is determined No in S310, and program control advances to S316 where it is determined No. Then, program control advances to S323, where it is determined Yes. Then, program control advances to S324. In S324, the object 10G is scrolled to be repelled away from the left adjacent object 10F so that the distance d₂ from the left adjacent object 10F changes to 50 (d₂=50). In other words, the object 10G is scrolled in a direction toward the object 10H that is the right adjacent object (in the right direction as viewed in the drawing). Then, program control advances to S312, and if it is determined in S312 that there is no finger release, program control returns to S301.

In the following, operations of the object 10C and the object 10H in Fig. 13 will be described with reference to Fig. 11. If it is determined that there is a finger movement on the display unit 116 in S301 in Fig. 11 (Yes), program control advances to S302. In S302, it is determined that both the object 10C and the object 10H are not the last objects (No), and subsequently it is determined in S304 that they are not the first objects (No), and program control advances to S309. For each of the objects 10C and 10H, the distance d₁ from its right adjacent object satisfies the relationship 100≤d₁≤107. Thus, it is determined Yes in S309, and program control advances to S310. Subsequently, for each of the objects 10C and 10H, the distance d₂ from its left adjacent object satisfies the relationship 100≤d₂≤107. Thus, it is determined Yes in S310, and in S311, it is determined that no scrolling is applied. Then, program control advances to S312, and if it is determined in S312 that there is no finger release, program control returns to S301.

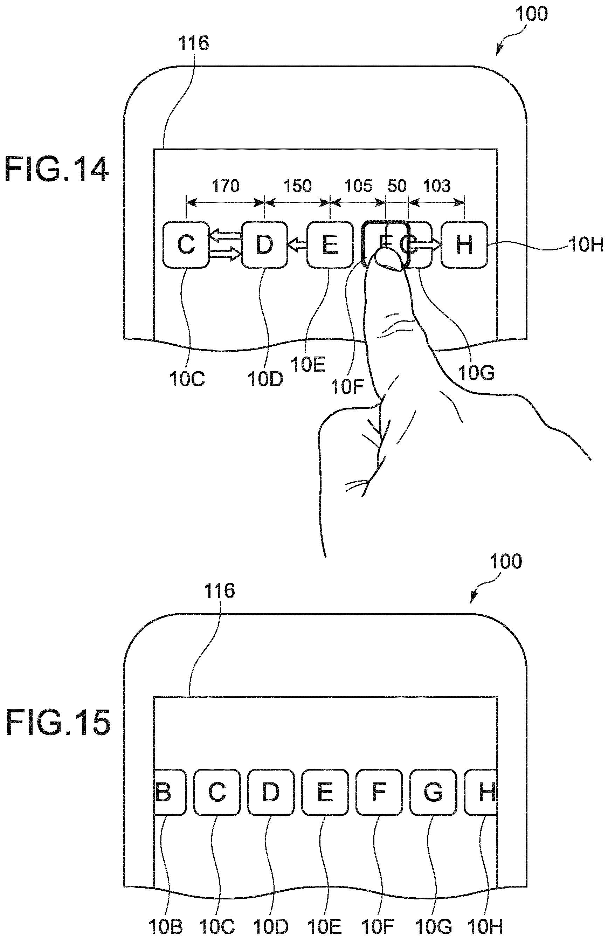

Subsequently, the display positions of the respective objects change from a state illustrated in Fig. 13 to a state illustrated in Fig. 14. As a result, the distance d between the object 10F and the object 10G changes to d=50 as illustrated in Fig. 14. Furthermore, the distance d between the object 10E and the object 10F changes to 105 (d=105), and the distance between the object 10D and the object 10E changes to 150 (d=150). Furthermore, the distance between the object C and the object D changes to 170, and the distance between the object G and the object H changes to 103. Until the object display changes from the display position of the object 10F illustrated in Fig. 13 to the display position of the object 10F illustrated in Fig. 14, the aforementioned processing routine is performed more than once according to the flowcharts illustrated in Figs. 9 to 11, and the respective inter-objects distances finally take the numerical values as those in Fig. 14.

In the following, operations of the object 10E in Fig. 14 will be described with reference to Fig. 11. If it is determined that there is a finger movement on the display unit 116 in S301 in Fig. 11 (Yes), program control advances to S302. Then, it is determined in S302 that the object 10E is not the last object (No), and subsequently it is determined in S304 that the object 10E is not the first object (No), and program control advances to S309. The distance d₁ between the object 10E and the object 10F that is right adjacent thereto changes to 105, so that it is determined Yes in S309, and program control advances to S310. In S310, the distance d₂ between the object 10E and the object 10D that is left adjacent thereto changes to 150, which exceeds b₂ (b₂=107), so that it is determined No in S310. Then, program control advances to S316. Subsequently, in S316, it is determined Yes, and in S317, the object 10E is scrolled to approach to its left adjacent object 10D. Then, program control advances to S312, and if it is determined in S312 that there is no finger release, program control returns to S301.

In the following, operations of the object 10D in Fig. 14 will be described with reference to Fig. 11. If it is determined that there is a finger movement on the display unit 116 in S301 in Fig. 11 (Yes), program control advances to S302. In S302, it is determined that the object 10D is not the last object (No), and subsequently it is determined in S304 that the object 10D is not the first object (No), and program control advances to S309. In S309, the distance d₁ between the object 10D and the object 10E that is right adjacent thereto changes to 150, which exceeds b₁ (b₁=107), so that it is determined No in S309, and program control advances to S313 where it is determined Yes. Then, program control advances to S314. The distance d₂ between the object 10D and its left adjacent object 10C is 170, so that it is determined No in S314, and program control advances to S318 where it is determined Yes. Then, program control advances to S319. Regarding the object 10D, the distance d₁ from its right adjacent object is 150, and the distance d₂ from its left adjacent object 10C is 170, so that it is determined in S319 that the relationship d1≥d2 (the distance from the right adjacent object (d1)≥ the distance from the left adjacent object (d2)) is not satisfied (No). Thus, in step S322, the object 10D is scrolled to approach to its left adjacent object 10C. Then, program control advances to S312, and if it is determined in S312 that there is no finger release, program control returns to S301.

In the following, operations of the object 10G in Fig. 14 will be described with reference to Fig. 11. If it is determined that there is a finger movement on the display unit 116 in S301 in Fig. 11 (Yes), program control advances to S302. It is determined in S302 that the object 10G is not the last object (No), and subsequently it is determined in S304 that the object 10G is not the first object (No), and program control advances to S309. The distance d between the object 10G and the object 10H that is right adjacent thereto changes to 103, so that it is determined Yes in S309, and program control advances to S310. The distance d₂ between the object 10G and the object 10F left adjacent thereto is 50, so that it is determined No in S310, and program control advances to S316 where it is determined No. Then, program control advances to S323, where it is determined No. Then, program control advances to S325. In S325, the object 10G is scrolled to be repelled away from its left adjacent object 10F so that the distance d₂ from the left adjacent object 10F changes to 100 (d₂=100). In other words, the object 10G is scrolled in a direction toward the object 10H that is its right adjacent object (in the right direction as viewed in the drawing). Then, program control advances to S312, and if it is determined in S312 that there is no finger release, program control returns to S301.

In the following, operations of the object 10C in Fig. 14 will be described with reference to Fig. 11. If it is determined that there is a finger movement on the display unit 116 in S301 in Fig. 11 (Yes), program control advances to S302. In S302, it is determined that the object 10C is not the last object (No), and subsequently it is determined in S304 that the object 10C is not the first object (No), and program control advances to S309. The distance d₁ between the object 10C and the object 10D that is right adjacent thereto changes to 170, which exceeds b₁ (b₁=107), so that it is determined No in S309, and program control advances to S313 where it is determined Yes. Thus, program control advances to S314. Since the distance d₂ between the object 10C and the object 10 B left adjacent thereto is 105, it is determined Yes in S314. Thus, in S315, the object 10C is scrolled to approach to the object 10D that is its right adjacent object. Then, program control advances to S312, and if it is determined in S312 that there is no finger release, program control returns to S301.

In the following, operations of the object 10H in Fig. 14 will be described with reference to Fig. 11. If it is determined that there is a finger movement on the display unit 116 in S301 in Fig. 11 (Yes), program control advances to S302. In S302, it is determined that the object 10H is not the last object (No), and subsequently it is determined in S304 that the object 10H is not the first object (No), and program control advances to S309. Regarding the object 10H, the distance d₁ from its right adjacent object 10I satisfies the relationship 100≤d₁≤107. Thus, it is determined Yes in S309, and program control advances to S310. Subsequently, the distance d₂ between the object 10H and its left adjacent object satisfies the relationship 100≤d₂≤107. Thus, it is determined Yes in S310, and in S311, it is determined that no scrolling is applied. Then, program control advances to S312, and if it is determined in S312 that there is no finger release, program control returns to S301.

When there is a finger release, regarding the scrolling object 10F, it is determined Yes in S204 in Fig. 10. For the chained objects, it is determined Yes in S312 in Fig. 11. Then, program control advances to S106 in Fig. 9. In S106, as illustrated in Fig. 15, the objects 10B to 10H are arranged in a manner that the scrolling object 10F is displayed at a finger-released position, and the other objects are equally spaced with reference to the object 10F, in this embodiment, in a manner that a distance d between the center lines of the objects is 105. After that, since the first object 10A is not displayed on the display unit 116, it is determined No in S107, and program control advances to S108. Since the last object is not displayed on the display unit 116, it is determined No in S108, and program control advances to S109. In S109, it is determined that the screen display is maintained as that displayed in S106, and a display screen as illustrated in Fig. 15 which is a display screen after scrolling has been complete.

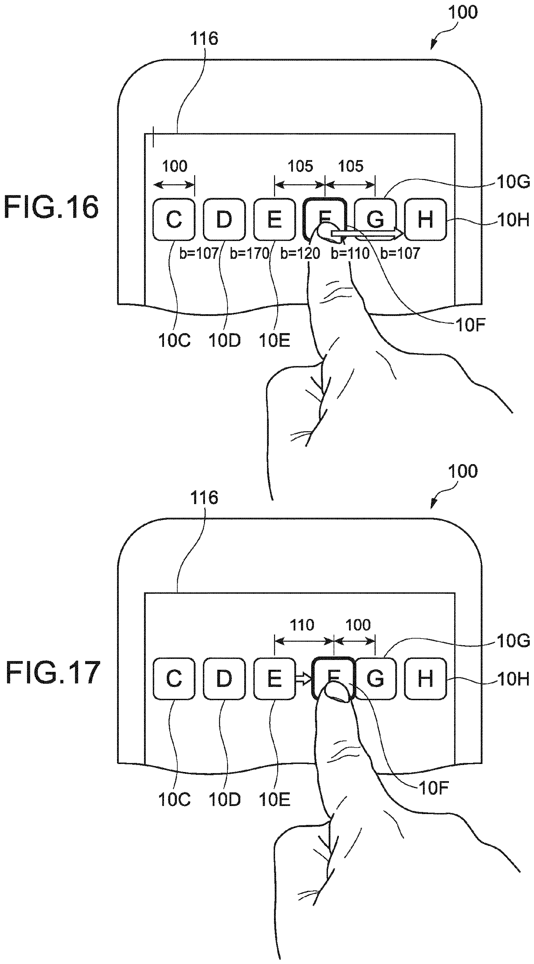

Next, examples of specific operations of objects in S301 to 329 will be described below with reference to Figs. 16 to 19. In Figs. 16 to 19, it is assume that each object pair, composed of two adjacent objects, has a time interval distance (b) which is different for each object pair, and it holds for all the object pairs that a=100. Regarding the object pair of the objects 10C and 10D, b is 107 (b=107), and when a distance d between the objects 10C and 10D satisfies the relationship 100≤d≤107, it is regarded as a dead zone. Regarding the object pair of the objects 10D and 10E, b is 170 (b=170), and when a distance d between the objects 10D and 10E satisfies the relationship 100≤d≤170, it is regarded as a dead zone. Regarding the object pair of the objects 10E and 10F, b is 120 (b=120), and when a distance d between the objects 10E and 10F satisfies the relationship 100≤d≤120, it is regarded as a dead zone. Regarding the object pair of the objects 10F and 10G, b is 110 (b=110), and when a distance d between the objects 10F and 10G satisfies the relationship 100≤d≤110, it is regarded as a dead zone. Regarding the object pair of the objects 10G and 10H, b is 107 (b=107), and when a distance d between the objects 10G and 10H satisfies the relationship 100≤d≤107, it is regarded as a dead zone. Figs. 16 to 19 illustrate changes in object display on the display unit 116 that occur over time when the object 10F is subjected to touching and scrolling.

First, when a finger touches the object 10F on the display unit 116 on which the objects 10C to 10H are displayed as illustrated in FIG. 16, it is determined Yes in step S101 in Fig. 9. The object 10F is determined Yes in S103, and is defined as a scrolling object in S104. The objects 10C to 10E, 10G and 10H are determined No in S103, and are defined as chained objects in S105. The object defined as a scrolling object advances to the flowchart illustrated in Fig. 10. The objects defined as chained objects advance to the flowchart illustrated in Fig. 11.

As illustrated in Fig. 17, if there is a finger movement with the finger touching the object 10F defined as a scrolling object, it is determined Yes in S201 in Fig. 10, and the object 10F is scrolled to a position corresponding to the finger movement in S203. In Fig. 12, the object 10F is subjected to five scrollings in the right direction as viewed in the drawing. Then, program control advances to S204, and if it is determined in S204 that there is no finger release, program control returns to S201.

As illustrated in Fig. 17, as the object 10F is scrolled, the distance d between the object 10E and the object 10F changes to 110. If it is determined that there is a finger movement on the display unit 116 in S301 in Fig. 11 (Yes), program control advances to S302. Then, it is determined in S302 that the object 10E is not the last object (No), and subsequently it is determined in S304 that the object 10E is not the first object (No), and program control advances to S309. It is determined in S309 that the distance d₁ between the object 10E and the object 10F that is right adjacent thereto is not greater than b₁ (b₁=120). Thus, program control advances to S310. The distance d₂ between the object 10E and its left adjacent object 10D is 105, which is within the dead zone range. Thus, it is determined Yes in S310. Then, in S311, it is determined that no scrolling is applied to the object 10F. Then, program control advances to S312, and if it is determined in S312 that there is no finger release, program control returns to S301.

As illustrated in Fig. 17, as the object 10F is scrolled, the distance d between the object 10F and the object 10G changes to 100, which is within the range represented by the relationship 100≤d≤110. The distance between the object 10C and the object 10D, the distance between the object 10D and the object 10E, and the distance between the object 10G and the object 10H are all 105, which is within the range represented by the relationship 100≤d≤b. If it is determined that there is a finger movement on the display unit 116 in S301 in Fig. 11 (Yes), program control advances to S302. It is determined in S302 that the objects 10C, 10D, 10G, and 10H are not the last objects (No), and subsequently it is determined in S304 that they are not the first objects (No), and program control advances to S309. For each of the objects 10C, 10D, 10G, and 10H, the distance d₁ from its right adjacent object satisfies the relationship 100≤d₁≤b₁. Thus, It is determined Yes in S309, and program control advances to S310. Subsequently, for each of the objects 10C, 10D, 10G, and 10H, the distance d₂ from its left adjacent object satisfies the relationship 100≤d₂≤b₂. Thus, It is determined Yes in S310, and program control advances to S311. Then, in S311, it is determined that no scrolling is applied. Subsequently, if it is determined in S312 that there is no finger release, program control returns to S301. Regarding the object 10C, an object 10B which is a left adjacent object to the object 10C is not displayed on the display unit 116. However, since the object 10C is not the first object 10A, an object (10B) to be referenced by the object 10C is present on the left side of the object 10C. Similarly, regarding the object 10H, although the object (101) that corresponds to its right adjacent object 10I is not displayed on the display unit 116, an object (101) to be referenced by the object 10H is present on the right side of the object 10H.

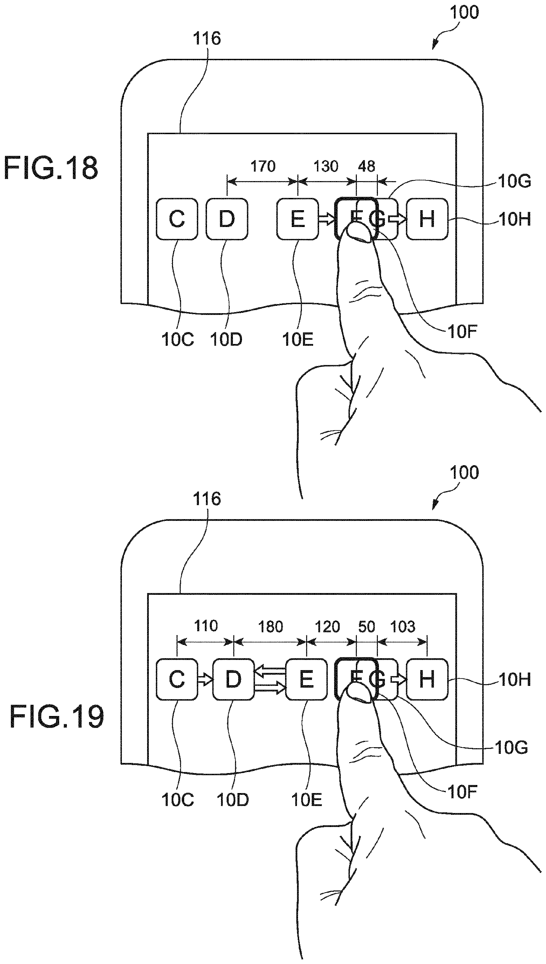

Subsequently, as illustrated in Fig. 18, if there is a finger movement with the finger further touching the object 10F, it is determined Yes in S201 in Fig. 10, and the object 10F is scrolled to a position corresponding to the finger movement in S203. In Fig. 18, the object 10F is scrolled so as to overlap the object 10G that is right adjacent to the object 10F. Then, program control advances to S204, and if it is determined in S204 that there is no finger release, program control returns to S201.

As illustrated in Fig. 18, as the object 10F is scrolled, the distance d between the object 10F and the object 10G changes to 48 (d=48). Furthermore, the distance d between the object 10E and the object 10F changes to 130 (d=130), and the distance between the object 10D and the object 10E changes to 170 (d=170). The distance d between the object C and the object D, and the distance d between the object G and the object H are all 105. Until the object display changes from the display position of the object 10F illustrated in Fig. 17 to the display position of the object 10F in Fig. 18, the aforementioned processing routine is performed more than once according to the flowcharts illustrated in Figs. 9 to 11, and the respective distances between objects finally take the numerical values as those in Fig. 18.

In the following, operations of the object 10E in Fig. 18 will be described with reference to Fig. 11. If it is determined that there is a finger movement on the display unit 116 in S301 in Fig. 11 (Yes), program control advances to S302. Then, it is determined in S302 that the object 10E is not the last object (No), and subsequently it is determined in S304 that the object 10E is not the first object (No), and program control advances to S309. In S309, the distance d₁ between the object 10E and the object 10F that is right adjacent thereto changes to 130, which exceeds b₁ (b₁=120), so that it is determined No in S309, and program control advances to S313 where it is determined Yes. Thus, program control advances to S314. The distance d₂ between the object 10E and its left adjacent object 10D changes to 170, which is within the dead zone range. Thus, it is determined Yes in S314. Then, in S315, the object 10E is scrolled to approach to its right adjacent object 10F. Then, program control advances to S312, and if it is determined in S312 that there is no finger release, program control returns to S301.

In the following, operations of the object 10D in Fig. 18 will be described with reference to Fig. 11. If it is determined that there is a finger movement on the display unit 116 in S301 in Fig. 11 (Yes), program control advances to S302. In S302, it is determined that the object 10D is not the last object (No), and subsequently it is determined in S304 that the object 10D is not the first object (No), and program control advances to S309. In S309, the distance d₁ between the object 10D and the object 10E that is right adjacent thereto changes to 170, which is within the dead zone range. Thus, it is determined Yes in S309, and program control advances to S310. The distance d₂ between the object 10D and its left adjacent object 10C is 105, which is within the dead zone range. Thus, it is determined Yes in S310. Then, in S311, it is determined that no scrolling is applied to the object 10D. Then, program control advances to S312, and if it is determined in S312 that there is no finger release, program control returns to S301.

In the following, operations of the object 10G in Fig. 18 will be described with reference to Fig. 11. If it is determined that there is a finger movement on the display unit 116 in S301 in Fig. 11 (Yes), program control advances to S302. It is determined in S302 that the object 10G is not the last object (No), and subsequently it is determined in S304 that the object 10G is not the first object (No), and program control advances to S309. In S309, the distance d between the object 10G and the object 10H that is right adjacent thereto changes to 105, so that it is determined Yes in S309, and program control advances to S310. The distance d between the object 10G and the object 10F left adjacent thereto is 48, so that it is determined No in S310. Then, program control advances to S316 where it is determined No. Then, program control advances to S323, where it is determined Yes. Then, program control advances to S324. In S324, the object 10G is scrolled to be repelled away from its left adjacent object 10F so that the distance d₂ from the left adjacent object 10F changes to 50 (d₂=50). In other words, the object 10G is scrolled in a direction toward the object 10H that is its right adjacent object (in the right direction as viewed in the drawing). Then, program control advances to S312, and if it is determined in S312 that there is no finger release, program control returns to S301.

In the following, operations of the object 10C and the object 10H in Fig. 18 will be described with reference to Fig. 11. If it is determined that there is a finger movement on the display unit 116 in S301 in Fig. 11 (Yes), program control advances to S302. In S302, it is determined that both the object 10C and the object 10H are not the last objects (No), and subsequently it is determined in S304 that they are not the first objects (No), and program control advances to S309. For each of the objects 10C and 10H, the distance d₁ from its right adjacent object satisfies the relationship 100≤d₁≤b₁. Thus, it is determined Yes in S309, and program control advances to S310. Subsequently, for each of the objects 10C and 10H, the distance d₂ from its left adjacent object satisfies the relationship 100≤d₂≤ b₂. Thus, it is determined Yes in S310, and in S311, it is determined that no scrolling is applied. Then, program control advances to S312, and if it is determined in S312 that there is no finger release, program control returns to S301.

Subsequently, the display positions of the respective objects change from a state illustrated in Fig. 18 to a state illustrated in Fig. 19. As a result, the distance d between the object 10F and the object 10G changes to d=50 as illustrated in Fig. 19. Furthermore, the distance d between the object 10E and the object 10F changes to 120 (d=120), and the distance between the object 10D and the object 10E changes to 180 (d=180). Furthermore, the distance between the object C and the object D changes to 110, and the distance between the object G and the object H changes to 103. Until the object display changes from the display position of the object 10F illustrated in Fig. 18 to the display position of the object 10F in Fig. 19, the aforementioned processing routine is performed more than once according to the flowcharts illustrated in Figs. 9 to 11, and the respective distances between objects finally take the numerical values as those in Fig. 19.

In the following, operations of the object 10E in Fig. 19 will be described with reference to Fig. 11. If it is determined that there is a finger movement on the display unit 116 in S301 in Fig. 11 (Yes), program control advances to S302. Then, it is determined in S302 that the object 10E is not the last object (No), and subsequently it is determined in S304 that the object 10E is not the first object (No), and program control advances to S309. The distance d₁ between the object 10E and the object 10F that is right adjacent thereto changes to 120, which is within the dead zone range. Thus, it is determined Yes in S309, and program control advances to S310. The distance d between the object 10E and the object 10D that is left adjacent thereto changes to 180, which exceeds b₂ (b₂=170), so that it is determined No in S310, and program control advances to S316 where it is determined Yes. Thus, program control advances to S317. In S317, the object 10E is scrolled to approach to the object 10D that is its left adjacent object. Then, program control advances to S312, and if it is determined in S312 that there is no finger release, program control returns to S301.

In the following, operations of the object 10D in Fig. 19 will be described with reference to Fig. 11. If it is determined that there is a finger movement on the display unit 116 in S301 in Fig. 11 (Yes), program control advances to S302. In S302, it is determined that the object 10D is not the last object (No), and subsequently it is determined in S304 that the object 10D is not the first object (No), and program control advances to S309. In S309, the distance d₁ between the object 10D and the object 10E that is right adjacent thereto changes to 180, which exceeds b₁ (b₁=170), so that it is determined No in S309, and program control advances to S313 where it is determined Yes. Thus, program control advances to S314. The distance d₂ between the object 10D and its left adjacent object 10C changes to 110, which exceeds b₂ (b₂=107). Thus, it is determined No in S314, and program control advances to S318 where it is determined Yes. Then, program control advances to S319. Regarding the object 10D, the distance from its right adjacent object is 180, and the distance from its left adjacent object is 110, so that it is determined in S319 that the relationship d₁≥d₂ (the distance from its right adjacent object (d₁)≥ the distance from its left adjacent object (d₂)) is satisfied (Yes). Thus, in step S320, the object 10D is scrolled to approach to its right adjacent object 10C. Then, program control advances to S312, and if it is determined in S312 that there is no finger release, program control returns to S301.

In the following, operations of the object 10G in Fig. 19 will be described with reference to Fig. 11. If it is determined that there is a finger movement on the display unit 116 in S301 in Fig. 11 (Yes), program control advances to S302. It is determined in S302 that the object 10G is not the last object (No), and subsequently it is determined in S304 that the object 10G is not the first object (No), and program control advances to S309. The distance d between the object 10G and the object 10H that is right adjacent thereto changes to 103, which is within the dead zone range. Thus, it is determined Yes in S309, and program control advances to S310. The distance d₂ between the object 10G and the object 10F that is left adjacent thereto is 50, so that it is determined No in S310, and program control advances to S316 where it is determined No. Then, program control advances to S323, where it is determined No. Then, program control advances to S325. In S325, the object 10G is scrolled to be repelled away from its left adjacent object 10F so that the distance d₂ from its left adjacent object 10F changes to 100 (d₂=100). In other words, the object 10G is scrolled in a direction toward the object 10H that is its right adjacent object (in the right direction as viewed in the drawing). Then, program control advances to S312, and if it is determined in S312 that there is no finger release, program control returns to S301.

In the following, operations of the object 10C will be described with reference to Fig. 11. If it is determined that there is a finger movement on the display unit 116 in S301 in Fig. 11 (Yes), program control advances to S302. In S302, it is determined that the object 10C is not the last object (No), and subsequently it is determined in S304 that the object 10C is not the first object (No), and program control advances to S309. The distance d₁ between the object 10C and the object 10D that is right adjacent thereto changes to 110, which exceeds b₁ (b₁=107), so that it is determined No in S309, and program control advances to S313 where it is determined Yes. Thus, program control advances to S314. Since the distance d₂ between the object 10C and the object 10 B left adjacent thereto is 105, it is determined Yes in S314. Thus, in S315, the object 10C is scrolled to approach to the object 10D that is its right adjacent object. Then, program control advances to S312, and if it is determined in S312 that there is no finger release, program control returns to S301.

In the following, operations of the object 10H will be described with reference to Fig. 11. If it is determined that there is a finger movement on the display unit 116 in S301 in Fig. 11 (Yes), program control advances to S302. In S302, it is determined that the object 10H is not the last object (No), and subsequently it is determined in S304 that the object 10H is not the first object (No), and program control advances to S309. Regarding the object 10H, the distance d₁ from its right adjacent object 10I satisfies the relationship 100≤d₁≤b₁. Thus, it is determined Yes in S309, and program control advances to S310. Subsequently, the distance d₂ between the object 10H and its left adjacent object satisfies the relationship 100≤d₂≤b₂. Thus, it is determined Yes in S310, and in S311, it is determined that no scrolling is applied. Then, program control advances to S312, and if it is determined in S312 that there is no finger release, program control returns to S301.

When there is a finger release, regarding the scrolling object 10F, it is determined Yes in S204 in Fig. 10. For the chained objects, it is determined Yes in S312 in Fig. 11. Then, program control advances to S106 in Fig. 9. In S106, as illustrated in Fig. 15, the objects 10B to 10H are arranged in a manner that the scrolling object 10F is displayed at a finger-released position, and the other objects are arrayed relative to the object 10F so that they are spaced apart at an equal distance from each other, in this embodiment, in a manner that a distance d between the center lines of the objects is 105. After that, since the first object 10A is not displayed on the display unit, it is determined No in S107, and program control advances to S108. Since the last object is not displayed on the display unit, it is determined No in S108, and program control advances to S109. In S109, it is determined that the screen display is maintained as that displayed in S106, and a display screen as illustrated in Fig. 15 which is a display screen after scrolling has been complete.

According to the present disclosure, the plurality of objects are scrolled according to a time interval distance between each two adjacent objects to set a distance between two adjacent objects. As a result, a relationship between the adjacent objects can be intuitively understood when they are scrolled, and this in turn associated information of the objects can be intuitively known.

In the following, operations of the objects displayed in S106 when the first object or the last object is displayed on the display unit will be described with reference to Fig. 9.

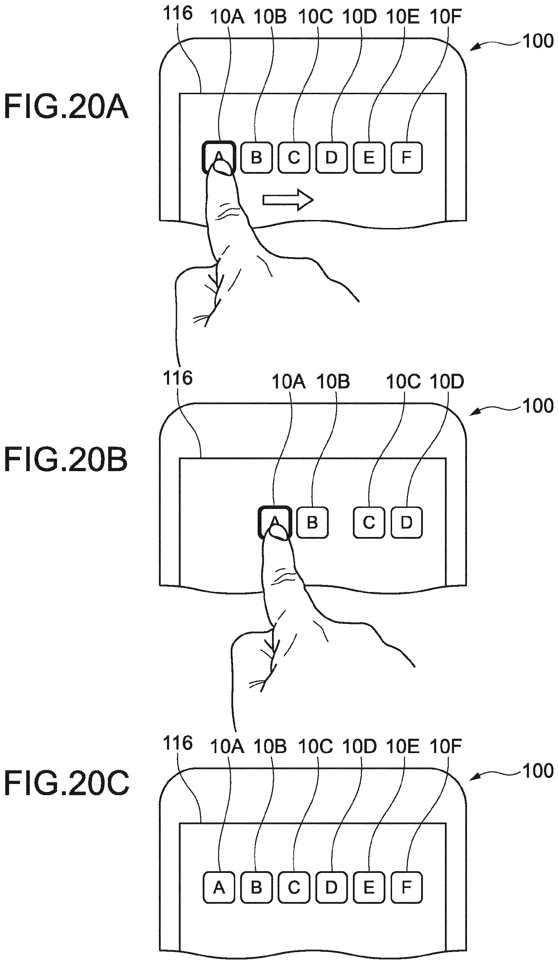

First, descriptions on the case in which the first object is displayed will be given below. For example, as illustrated in Fig. 20A, a user touches the object 10A on the display unit 116 on which the objects 10A to 10F are displayed in an equally-spaced arrangement with a user's finger, and moves the finger on the display unit 116 in the right direction as viewed in the drawing, with the finger touching the display unit 116. As a result, the object 10A, which is a scrolling object, is scrolled to a position corresponding to a finger movement in step S203, as illustrated in Fig. 20B. Furthermore, with change in display position of the object 10A, the chained objects 10B to 10D displayed on the display unit 116 also change in display position according to the flow specified in Fig. 11. If it is determined in S204 and S312 that there is a finger release (Yes), the object 10A is displayed at a finger-released position, and the other objects are arrayed relative to the object 10A so that they are spaced apart at an equal distance from each other in S106. Subsequently, it is determined in S107 that the first object 10A is displayed on the display unit 116 (Yes), and program control advances to S110. In S110, these objects are scrolled so that the first object 10A is positioned at a predetermined left side part on the display unit as illustrated in Fig. 20C, and that the other objects are displayed relative to the object 10A so that the objects are spaced apart at an equal distance, in this embodiment, with an distance between objects of 105. Here, the predetermined left side part of the display unit is a display position of the leftmost object when a plurality of objects are displayed on an initial screen when a camera application is started.

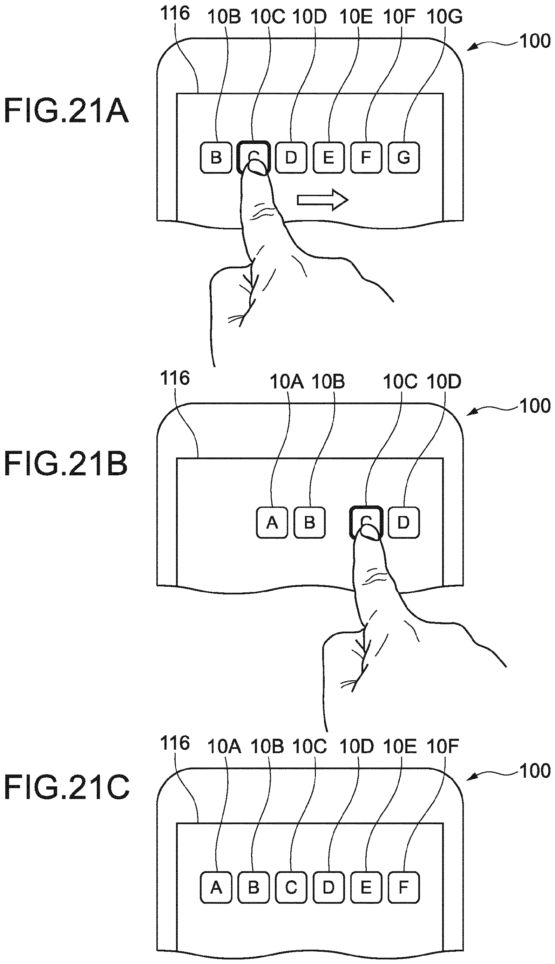

Although an example in which the first object is a scrolling object has been described above, this is also the case when the first object is a chained object. For example, as illustrated in Fig. 21A, a user touches with the user's finger on the object 10C on the display unit 116 on which the objects 10B to 10G are displayed in an equally-spaced arrangement, and moves the finger on the display unit 116 in the right direction as viewed in the drawing, with the finger touching the display unit 116. As a result, the object 10C, which is a scrolling object, is scrolled to a position corresponding to a finger movement in step S203, as illustrated in Fig. 21B. Furthermore, with change in display position of the object 10C, the chained objects 10A, 10B, and 10D to 10G, which are displayed on the display unit 116, also change in display position according to the flow specified in Fig. 11. If it is determined in S204 and S312 that there is a finger release (Yes), the object 10C is displayed at a finger-released position, and the other objects are arrayed relative to the object 10C so that they are spaced apart at an equal distance from each other in S106. Subsequently, it is determined in S107 that the first object 10A is displayed on the display unit 116 (Yes), and program control advances to S110. In S110, these objects are scrolled so that the first object 10A is positioned at a predetermined left side part on the display unit as illustrated in Fig. 21C, and that the other objects are displayed relative to the object 10A so that the objects are spaced apart at an equal distance, in this embodiment, with a distance between objects of 105.

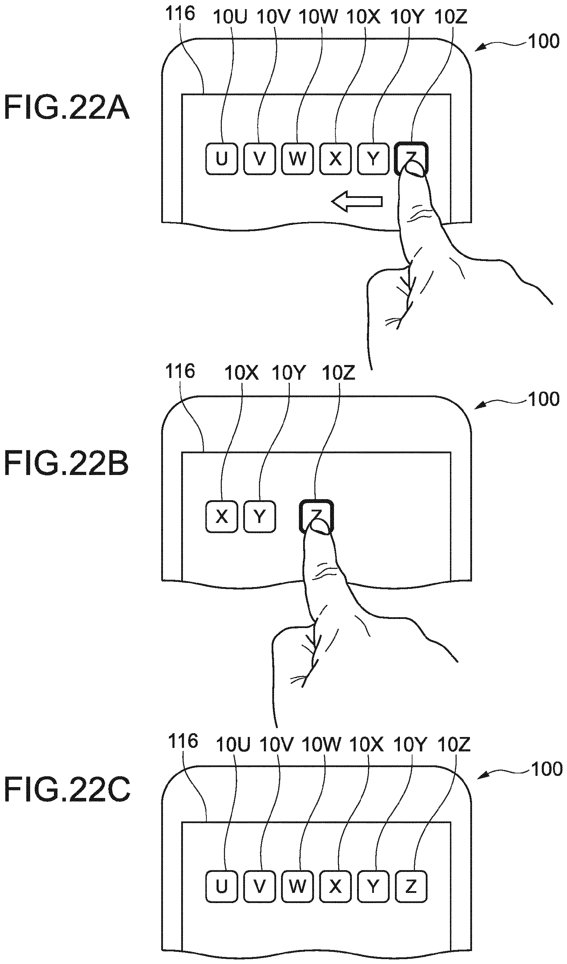

Nest, descriptions on the case in which the last object is displayed will be given below. For example, as illustrated in Fig. 22A, a user touches with the user's finger the object 10Z on the display unit 116 on which the objects 10U to 10Z are displayed in an equally-spaced arrangement, and moves the finger on the display unit 116 in the left direction as viewed in the drawing, with the finger touching the display unit 116. As a result, the object 10Z, which is a scrolling object, is scrolled to a position corresponding to a finger movement in step S203, as illustrated in Fig. 22B. Furthermore, with change in display position of the object 10Z, the chained objects 10U to 10Y displayed on the display unit 116 also change in display position according to the flow specified in Fig. 11. If it is determined in S204 and S312 that there is a finger release (Yes), then, in S106, the object 10Z is displayed at a finger-released position, and the other objects are arrayed relative to the object 10Z so that they are spaced apart at an equal distance from each other. Subsequently, it is determined in S107 that the first object 10A is not displayed on the display unit 116 (No), and program control advances to S108. In S108, it is determined that the last object is displayed on the display unit (Yes), and program control advances to S111. In S111, these objects are scrolled so that the last object 10Z is positioned at a predetermined right side part on the display unit, and that the other objects are displayed relative to the object 10Z so that the objects are spaced apart at an equal distance, in this embodiment, with a distance between objects of 105, as illustrated in Fig. 22C. Here, the predetermined right side part of the display unit is a display position of the rightmost object when a plurality of objects are displayed on an initial screen when a camera application is started.

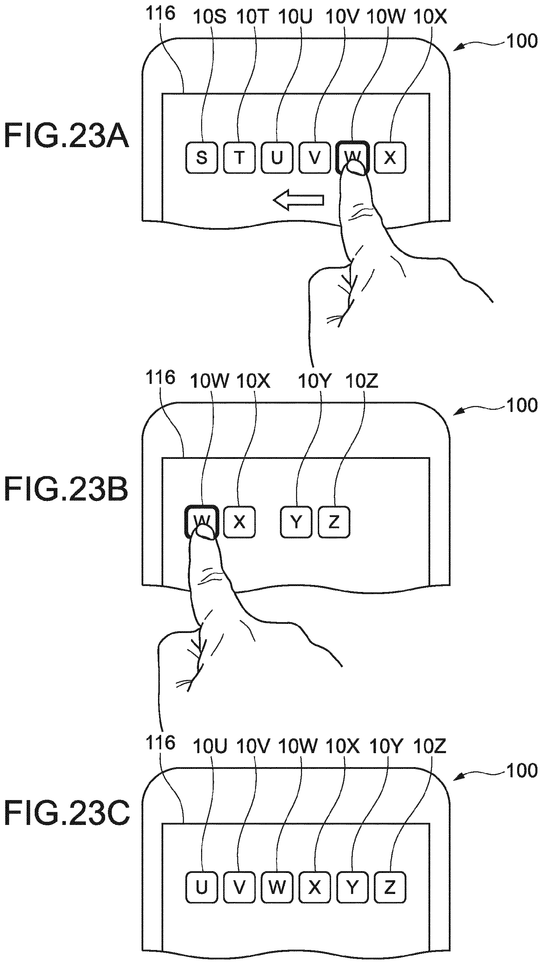

Although an example in which the last object is a scrolling object has been described above, this is also the case when the last object is a chained object. For example, as illustrated in Fig. 23A, a user touches with the user's finger the object 10W on the display unit 116 on which the objects 10S to 10X are displayed in an equally-spaced arrangement, and moves the finger on the display unit 116 in the left direction as viewed in the drawing with the finger touching the display unit 116. As a result, the object 10W, which is a scrolling object, is scrolled to a position corresponding to a finger movement in step S203, as illustrated in Fig. 23B. Furthermore, with change in display position of the object 10W, the chained objects 10S to 10V, and 10X to 10Z, which are displayed on the display unit 116, also change in display position according to the flow specified in Fig. 11. If it is determined in S204 and S312 that there is a finger release (Yes), then, in S106, the object 10W is displayed at a finger-released position, and the other objects are arrayed relative to the object 10W so that they are spaced apart at an equal distance from each other. Subsequently, it is determined in S107 that the first object 10A is not displayed on the display unit 116 (No), and program control advances to S108. In 108, it is determined that the last object 10Z is displayed on the display unit (Yes), and program control advances to S111. In S111, these objects are scrolled so that the last object 10Z is positioned at a predetermined right side part on the display unit as illustrated in Fig. 22C, and that the other objects are displayed relative to the object 10Z so that the objects are spaced apart at an equal distance, in this embodiment, with a distance between objects of 105.

In this way, scrolling the first or last object so that it is placed at a predetermined display position when the first or the last object appears on the display unit at a time when a finger release is made allows more objects to be displayed.

### (Advantages of Scrolling Operations according to the Present disclosure)

As described above, with the information processing apparatus 100, a temporal relationship between the adjacent objects can be intuitively understood when scrolling is performed, and in turn associated temporal information of the objects can be intuitively known.

A display control method for a plurality of the objects to be scrolled so that they are equally spaced with the same distance between adjacent objects has been conceived. However, with such a display control method, only individual objects carry a meaning, and a relationship between adjacent objects is unknown. In contrast, according to the present disclosure, motions of the objects are controlled according to a semantic distance between adjacent objects, so that a relationship between adjacent objects can be intuitively understood from the motions of the objects when they are scrolled.

### (Modified Example)

In the embodiment described above, objects are scrolled in the horizontal direction. However, objects may be scrolled in the vertical direction. Furthermore, in the embodiment above, a plurality of objects are arranged in ascending time order. However, they may be arranged in descending time order.

Furthermore, in the embodiment described above, a thumb nailed image of a photographic image by camera function is used as an object. However, a thumb nailed image of a video image by video function may be used as an object. In addition, recorded music data may be organized as an object for each album.

Furthermore, in the embodiment described above, an example is described in which each object is associated with time information, based on which a time interval distance as a semantic distance between adjacent objects is calculated. However, the present disclosure is not limited thereto. For example, each object may be associated with position information, and a positional distance as a semantic distance between adjacent objects may be calculated based on the position information. For example, it is considered that a thumb nailed image of a photographed image is provided as an object, a place at which an image is photographed (hereinafter referred to as a "photograph place") is associated with each object as position information, and a distance between a photograph place associated with one object and a photograph place associated with another object that is immediately adjacent thereto may be used as a positional distance. Assuming that there are three objects A, B, and C, a distance from a photograph place of the object A to a photograph place of the object B is 10 km, and a distance from the photograph place of the object B to a photograph place of the object C is 20 km, the relationship between the maximal distance b₁ between the objects A and B within the dead zone and the maximal distance b₂ between the objects B and C within the dead zone when they are scrolled may be b₁:b₂ = 1:2. This allows a user to intuitively grasp positional distances among the objects when the objects are scrolled.

Furthermore, each object may be associated with category information, and an inter-category distance as a semantic distance between adjacent objects may be calculated based on the category information. For example, it is considered that a plurality of music albums are recorded, each album is provided as an object, and category information such as about musical genre information and artist information is associated with each object. By way of example, a case in which category information is artist information will be described below. In this case, an inter-category distance between adjacent objects is determined according to the initial letter of an artist's name. Specifically, artist information of each object is digitized based on an ordinal number of the initial letter of the artist' name in alphabetical order. For example, A is converted to 1, B is converted to 2, and C is converted to 3, ...Y is converted to 25, and Z is converted to 26. For example, assuming that there are three objects A, B, and C, the initial letter of an artist's name of the object A is "C" which is the third letter in alphabetic sequence, and the initial letter of an artist's name of the object B is "D" which is the fourth letter in alphabetic sequence, and the initial letter of an artist's name of the object C is "J" which is the tenth letter in alphabetic sequence, in this case, the distance between the object A and the object B is 1, and the distance between the object B and the object C is 6. The relationship between the maximal distance b₁ between the objects A and B within the dead zone and the maximal distance b₂ between the objects B and C within the dead zone when they are scrolled may be b₁:b₂ = 1:6. This allows a user to intuitively grasp inter-category distances among the objects when they are scrolled.

In the embodiment above, a time interval distance is calculated based on time information of each object. However, it may be considered to provide a plurality of groups of objects, and to calculate a time interval distance between adjacent groups based on time information of each group. For example, assuming that a first group is a group of objects A to D photographed at January 2010, a second group is a group of objects E to G photographed at February 2010, and a third group is a group of objects H to Z photographed at August 2010, a time interval distance between the first group and the second group is one month, and a time interval distance between the second group and the third group is six months. In the case in which only the first group objects are displayed on the display unit when scrolling is performed, the first group objects A to D are controlled to be scrolled so that the objects are equally spaced from one another. In the case in which the last object D of the first group and the first object E of the second group are displayed on the display unit when scrolling is performed, setting is performed so that the maximal distance d₁ between the object D and the object E is greater than each with a distance between objects among the objects A to D. In the case in which the last object G of the second group and the first object H of the third group are displayed on the display unit when scrolling is performed, setting is performed so that the maximal distance d₂ between the object G and the object H is six times d1. This allows a user to intuitively grasp time interval distances among adjacent groups when scrolling is performed.

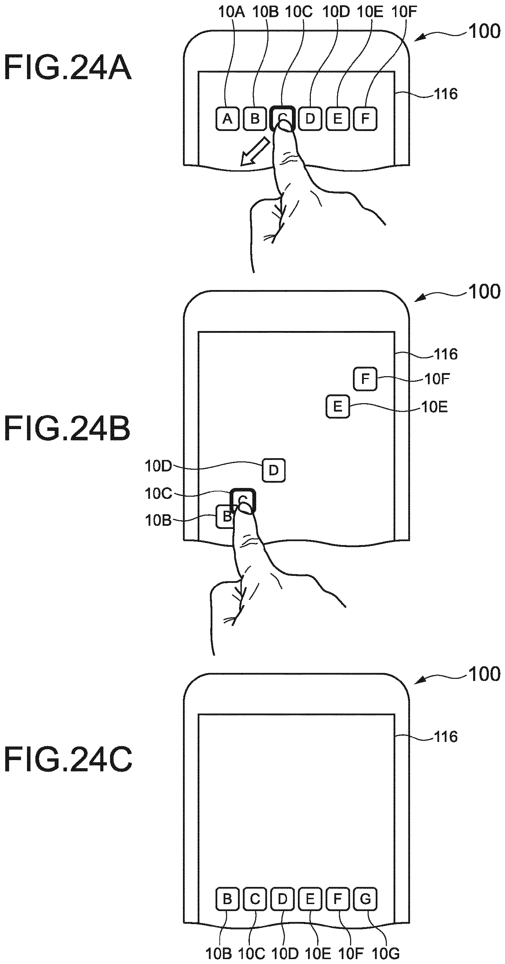

Although an example in which objects are horizontally scrolled has been described, the objects may be scrollable in a diagonal direction as well as the horizontal direction as illustrated in Figs. 24. For example, a display position of an object may be changeable from an upper part to a lower part of the display unit 116. For example, when objects 10A to 10F positioned at an upper part of the display unit 116 are scrolled as illustrated in Fig. 24A, a user touches the object 10C with a finger, and moves the finger in a diagonal direction as illustrated in Fig. 24B. As illustrated in Fig. 24B, even when the objects are scrolled in a diagonal direction, a distance between objects when the objects are scrolled may be made different for each adjacent object pair according to the time interval distance there between. When a finger movement of a finger that touches the object 10C to a desired position and a finger release are made, the object 10C is displayed at a position corresponding to the finger movement. At this time, the objects 10 B to 10G are scrolled relative to the object 10C so that they are displayed in an arrangement in which the objects are equally spaced one another along the horizontal direction.

The present disclosure contains subject matter related to that disclosed in Japanese Priority Patent Application JP 2011-228109 filed in the Japan Patent Office on October 23, 2011, the entire content of which may be of interest to the skilled reader.

It should be understood by those skilled in the art that various modifications, combinations, sub-combinations and alterations may occur depending on design requirements and other factors insofar as they are within the scope of the appended claims.

## Claims

1. An information processing apparatus (100) comprising:
a display controller (119) configured to display a first object (10a) separated from a second object (10b) by a displayed distance; and
a controller (111) configured to adjust the displayed distance between the first object (10a) and the second object (10b) based on a relatedness distance between the first object (10a) and the second object (10b) when a scrolling operation is performed; and
a touch panel display (117) on which the first object (10a) and the second object (10b) are displayed, wherein
the display controller (119) is configured to detect a user touch on the first object (10a) as part of the scrolling operation, **characterized in that**
the controller (111) is configured to respond by moving the second object (10b) away from the first object (10a) according to the relatedness distance between the first object (10a) and the second object (10b), and wherein
the controller (111) is configured to further adjust the displayed distance to be an equal distance once the scrolling operation is completed.

2. The information processing apparatus (100) of claim 1, wherein said relatedness distance is a time interval distance associated with capture times for the first object (10a) and the second object (10b) respectively.

3. The information processing apparatus (100) of claim 1, wherein said relatedness distance corresponds with positional information associated with the first object (10a) and the second object (10b) respectively.

4. The information processing apparatus (100) of claim 1, wherein said relatedness distance corresponds with a difference in genre associated with the first object (10a) and the second object (10b) respectively.

5. The information processing apparatus (100) of any preceding claim, wherein:
the controller (111) is configured to set a scrolling speed as a function of scrolling distance of at least one of the first object (10a) and the second object (10b).

6. The information processing apparatus (100) of any preceding claim, wherein a scrolling direction is a vertical direction on a display screen.

7. The information processing apparatus (100) of any preceding claim, further comprising:
a network interface configured to receive an indication of the relatedness distance from a remote computer; and/or
a network interface configured to receive content data from a remote computer for the first object (10a) when the controller (111) determines that the first object (10a) has been selected.

8. An information processing method comprising:
displaying with a display controller (119) a first object (10a) separated from a second object (10b) by a displayed distance;
selecting the first object (10a);
scrolling the first object (10a) and the second object (10b) on a display, and adjusting with a controller (111) the displayed distance between the first object (10a) and the second object (10b) based on a relatedness distance between the first object (10a) and the second object (10b); and
detecting a user touch of the first object (10a) on a touch panel display (117) as part of the scrolling operation,
**characterized in that** the controller (111) responds by moving the second object (10b) away from the first object (10a) according to the relatedness distance between the first object (10a) and the second object (10b), wherein
the adjusting includes adjusting the displayed distance to be an equal distance once the scrolling operation is completed.

9. The information processing method of claim 8, wherein said relatedness distance:
is a time interval distance associated with capture times for the first object (10a) and the second object (10b) respectively; or
corresponds with positional information associated with the first object (10a) and the second object (10b) respectively; or
corresponds with a difference in genre associated with the first object (10a) and the second object (10b) respectively.

10. The information processing method of claim 8 or 9, wherein
the controller (111) sets a scrolling speed as a function of scrolling distance of at least one of the first object (10a) and the second object (10b).

11. A computer program product having computer readable instructions that when executed by a processing circuit implements an information processing method according to claim 8 on an apparatus according to claim 1.

## Patentansprüche

1. Datenverarbeitungsvorrichtung (100), die Folgendes umfasst:
eine Anzeigesteuereinrichtung (119), die konfiguriert ist, einen ersten Gegenstand (10a) um einen angezeigten Abstand von einem zweiten Gegenstand (10b) getrennt anzuzeigen; und
eine Steuereinrichtung (111), die konfiguriert ist, den angezeigten Abstand zwischen dem ersten Gegenstand (10a) und dem zweiten Gegenstand (10b) auf der Grundlage eines Beziehungsabstands zwischen dem ersten Gegenstand (10a) und dem zweiten Gegenstand (10b) einzustellen, wenn ein Scroll-Vorgang durchgeführt wird; und
eine Anzeige (117) mit Berührungsbildschirm, auf der der erste Gegenstand (10a) und der zweite Gegenstand (10b) angezeigt werden, wobei
die Anzeigesteuereinrichtung (119) konfiguriert ist, eine Anwenderberührung auf dem ersten Gegenstand (10a) als Teil des Scroll-Vorgangs zu detektieren, **dadurch gekennzeichnet, dass**
die Steuereinrichtung (111) konfiguriert ist, durch Bewegen des zweiten Gegenstands (10b) vom ersten Gegenstand (10a) weg gemäß dem Beziehungsabstand zwischen dem ersten Gegenstand (10a) und dem zweiten Gegenstand (10b) zu antworten, und wobei
die Steuereinrichtung (111) konfiguriert ist, den angezeigten Anstand ferner derart einzustellen, dass er ein gleicher Abstand ist, sobald der Scroll-Vorgang abgeschlossen ist.

2. Datenverarbeitungsvorrichtung (100) nach Anspruch 1, wobei der Beziehungsabstand ein Zeitintervallabstand ist, der erfassten Zeiten für den ersten Gegenstand (10a) bzw. den zweiten Gegenstand (10b) zugeordnet ist.

3. Datenverarbeitungsvorrichtung (100) nach Anspruch 1, wobei der Beziehungsabstand Positionsinformationen entspricht, die dem ersten Gegenstand (10a) bzw. dem zweiten Gegenstand (10b) zugeordnet sind.

4. Datenverarbeitungsvorrichtung (100) nach Anspruch 1, wobei der Beziehungsabstand einem Unterschied einer Gattung entspricht, die dem ersten Gegenstand (10a) bzw. dem zweiten Gegenstand (10b) zugeordnet ist.

5. Datenverarbeitungsvorrichtung (100) nach einem der vorhergehenden Ansprüche, wobei:
die Steuereinrichtung (111) konfiguriert ist, eine Scroll-Geschwindigkeit als eine Funktion des Scroll-Abstands des ersten Gegenstands (10a) und/oder des zweiten Gegenstands (10b) einzustellen.

6. Datenverarbeitungsvorrichtung (100) nach einem der vorhergehenden Ansprüche, wobei eine Scroll-Richtung eine vertikale Richtung auf einem Anzeigebildschirm ist.

7. Datenverarbeitungsvorrichtung (100) nach einem der vorhergehenden Ansprüche, die ferner Folgendes umfasst:
eine Netzschnittstelle, die konfiguriert ist, eine Angabe des Beziehungsabstands von einem fernen Computer zu empfangen; und/oder
eine Netzschnittstelle, die konfiguriert ist, von einem fernen Computer Inhaltsdaten für den ersten Gegenstand (10a) zu empfangen, wenn die Steuereinrichtung (111) bestimmt, dass der erste Gegenstand (10a) ausgewählt worden ist.

8. Datenverarbeitungsverfahren, das Folgendes umfasst:
Anzeigen eines ersten Gegenstands (10a) getrennt um einen angezeigten Abstand von einem zweiten Gegenstand (10b) mit einer Anzeigesteuereinrichtung (119);
Auswählen des ersten Gegenstands (10a);
Scrollen des ersten Gegenstands (10a) und des zweiten Gegenstands (10b) auf einer Anzeige und Einstellen des angezeigten Abstands zwischen dem ersten Gegenstand (10a) und dem zweiten Gegenstand (10b) mit einer Steuereinrichtung (111) auf der Grundlage eines Beziehungsabstands zwischen dem ersten Gegenstand (10a) und dem zweiten Gegenstand (10b); und
Detektieren einer Anwenderberührung des ersten Gegenstands (10a) auf einer Anzeige (117) mit Berührungsbildschirm als Teil des Scroll-Vorgangs,
**dadurch gekennzeichnet, dass** die Steuereinrichtung (111) durch Bewegen des zweiten Gegenstands (10b) vom ersten Gegenstand (10a) weg gemäß dem Beziehungsabstand zwischen dem ersten Gegenstand (10a) und dem zweiten Gegenstand (10b) antwortet, wobei
das Einstellen das Einstellen des angezeigten Abstands derart, dass er ein gleicher Abstand ist, sobald der Scroll-Vorgang abgeschlossen ist, umfasst.

9. Datenverarbeitungsverfahren nach Anspruch 8, wobei der Beziehungsabstand:
ein Zeitintervallabstand ist, der erfassten Zeiten für den ersten Gegenstand (10a) bzw. den zweiten Gegenstand (10b) zugeordnet ist; oder
Positionsinformationen entspricht, die dem ersten Gegenstand (10a) bzw. dem zweiten Gegenstand (10b) zugeordnet sind; oder
einem Unterschied einer Gattung entspricht, die dem ersten Gegenstand (10a) bzw. dem zweiten Gegenstand (10b) zugeordnet ist.

10. Datenverarbeitungsverfahren nach Anspruch 8 oder 9, wobei
die Steuereinrichtung (111) eine Scroll-Geschwindigkeit als eine Funktion des Scroll-Abstands des ersten Gegenstands (10a) und/oder des zweiten Gegenstands (10b) einstellt.

11. Computerprogrammprodukt, das computerlesbare Anweisungen aufweist, die dann, wenn sie durch eine Verarbeitungsschaltung ausgeführt werden, ein Datenverarbeitungsverfahren nach Anspruch 8 auf einer Vorrichtung nach Anspruch 1 implementieren.

## Revendications

1. Appareil de traitement d'informations (100), comprenant :
un contrôleur d'affichage (119) configuré pour afficher un premier objet (10a) séparé d'un deuxième objet (10b) d'une distance affichée ; et
un contrôleur (111) configuré pour ajuster la distance affichée entre le premier objet (10a) et le deuxième objet (10b) sur la base d'une distance de parenté entre le premier objet (10a) et le deuxième objet (10b) lorsqu'une opération de déplacement par glissement est effectuée ; et
un affichage à panneau tactile (117) sur lequel le premier objet (10a) et le deuxième objet (10b) sont affichés,
le contrôleur d'affichage (119) étant configuré pour détecter un toucher d'utilisateur sur le premier objet (10a) dans le cadre de l'opération de déplacement par glissement,
**caractérisé en ce que** le contrôleur (111) est configuré pour réagir en éloignant le deuxième objet (10b) du premier objet (10a) selon la distance de parenté entre le premier objet (10a) et le deuxième objet (10b), et
le contrôleur (111) étant configuré pour ajuster davantage la distance affichée en une distance égale une fois l'opération de déplacement par glissement achevée.

2. Appareil de traitement d'informations (100) selon la revendication 1, dans lequel ladite distance de parenté consiste en une distance en intervalle de temps associée à des temps de capture respectivement pour le premier objet (10a) et pour le deuxième objet (10b).

3. Appareil de traitement d'informations (100) selon la revendication 1, dans lequel ladite distance de parenté correspond à des informations de position associées respectivement au premier objet (10a) et au deuxième objet (10b).

4. Appareil de traitement d'informations (100) selon la revendication 1, dans lequel ladite distance de parenté correspond à une différence de genre associée respectivement au premier objet (10a) et au deuxième objet (10b).

5. Appareil de traitement d'informations (100) selon l'une quelconque des revendications précédentes, dans lequel :
le contrôleur (111) est configuré pour définir une vitesse de déplacement par glissement en fonction d'une distance de déplacement par glissement du premier objet (10a) et/ou du deuxième objet (10b).

6. Appareil de traitement d'informations (100) selon l'une quelconque des revendications précédentes, dans lequel une direction de déplacement par glissement consiste en une direction verticale sur un écran d'affichage.

7. Appareil de traitement d'informations (100) selon l'une quelconque des revendications précédentes, comprenant en outre :
une interface réseau configurée pour recevoir, depuis un ordinateur distant, une indication de la distance de parenté ; et/ou
une interface réseau configurée pour recevoir, depuis un ordinateur distant, des données de contenu pour le premier objet (10a) lorsque le contrôleur (111) détermine que le premier objet (10a) a été sélectionné.

8. Procédé de traitement d'informations, comprenant :
l'affichage, au moyen d'un contrôleur d'affichage (119), d'un premier objet (10a) séparé d'un deuxième objet (10b) d'une distance affichée ;
la sélection du premier objet (10a) ;
le déplacement par glissement du premier objet (10a) et du deuxième objet (10b) sur un affichage, et l'ajustement, au moyen d'un contrôleur (111), de la distance affichée entre le premier objet (10a) et le deuxième objet (10b) sur la base d'une distance de parenté entre le premier objet (10a) et le deuxième objet (10b) ; et
la détection d'un toucher d'utilisateur du premier objet (10a) sur un affichage à écran tactile (117) dans le cadre de l'opération de déplacement par glissement,
**caractérisé en ce que** le contrôleur (111) réagit en éloignant le deuxième objet (10b) du premier objet (10a) selon la distance de parenté entre le premier objet (10a) et le deuxième objet (10b),
l'ajustement comportant l'ajustement de la distance affichée en une distance égale une fois l'opération de déplacement par glissement achevée.

9. Procédé de traitement d'informations selon la revendication 8, dans lequel ladite distance de parenté :
consiste en une distance en intervalle de temps associée à des temps de capture respectivement pour le premier objet (10a) et pour le deuxième objet (10b) ; ou
correspond à des informations de position associées respectivement au premier objet (10a) et au deuxième objet (10b) ; ou
correspond à une différence de genre associée respectivement au premier objet (10a) et au deuxième objet (10b).

10. Procédé de traitement d'informations selon la revendication 8 ou 9, dans lequel
le contrôleur (111) définit une vitesse de déplacement par glissement en fonction d'une distance de déplacement par glissement du premier objet (10a) et/ou du deuxième objet (10b).

11. Produit-programme d'ordinateur comportant des instructions lisibles par ordinateur dont l'exécution par un circuit de traitement met en oeuvre un procédé de traitement d'informations selon la revendication 8 sur un appareil selon la revendication 1.
